# EUROPEAN PATENT APPLICATION

(11) **EP 4 750 183 A1**
(43) Date of publication of application: **27.05.2026**
(21) Application number: 24843477.1
(22) Date of filing: 16.07.2024
(51) Int. Cl.: H04W 72/02, H04W 72/0446, H04W 72/50, H04W 74/0808, H04W 74/08, H04W 72/1263, H04W 72/566, H04L 1/1812

(54) **METHOD AND APPARATUS FOR DETERMINING PHYSICAL FEEDBACK CHANNEL OCCASION IN CONSIDERATION OF CHANNEL ACCESS TIME FOR CHANNEL OCCUPANCY**

(30) Priority: 19.07.2023 KR 20230094155; 20.07.2023 KR 20230094699; 21.07.2023 KR 20230095454; 26.07.2023 KR 20230097819; 27.07.2023 KR 20230098348
(71) Applicant: LG Electronics Inc., Yeongdeungpo-gu Seoul 07336 (KR)
(72) Inventor: PARK, Giwon, Seoul 06772 (KR); LEE, Seungmin, Seoul 06772 (KR); BACK, Seoyoung, Seoul 06772 (KR); HWANG, Daesung, Seoul 06772 (KR)
(74) Representative: Maikowski & Ninnemann Patentanwälte Partnerschaft mbB
(86) International application number: PCT/KR2024/010175
(87) International publication number: WO 2025/018762

(57) **Abstract**

A method whereby a first device communicates wirelessly, and a device supporting same are provided. The method may comprise the steps of: selecting a first resource for a first physical shared channel; selecting a second resource for a second physical shared channel; and determining a physical feedback channel occasion for the first physical shared channel. For example, the physical feedback channel occasion may be determined on the basis of a channel access time for accessing the second resource after the first resource.

## Description

### TECHNICAL FIELD

This disclosure relates to a wireless communication system.

### BACKGROUND ART

5G NR is a successive technology of long term evolution (LTE) corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with machine learning capabilities. The vision of the 6G system can have four aspects: intelligent connectivity, deep connectivity, holographic connectivity, and ubiquitous connectivity, and the 6G system can satisfy the requirements as shown in Table 1 below. In other words, Table 1 is an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

In one embodiment, provided is a method for performing wireless communication by a first device. The method may comprise: selecting a first resource for a first physical shared channel; selecting a second resource for a second physical shared channel; and determining a physical feedback channel occasion for the first physical shared channel. For example, the physical feedback channel occasion may be determined based on a channel access time for accessing the second resource after the first resource.

In one embodiment, provided is a first device configured to perform wireless communication. The first device may comprise: at least one transceiver; at least one processor; and at least one memory connected to the at least one processor and storing instructions. For example, the instructions, based on being executed by the at least one processor, cause the first device to perform operations comprising: selecting a first resource for a first physical shared channel; selecting a second resource for a second physical shared channel; and determining a physical feedback channel occasion for the first physical shared channel. For example, the physical feedback channel occasion may be determined based on a channel access time for accessing the second resource after the first resource.

In one embodiment, provided is a processing device configured to control a first device. The processing device may comprise: at least one processor; and at least one memory connected to the at least one processor and storing instructions. For example, the instructions, based on being executed by the at least one processor, cause the first device to perform operations comprising: selecting a first resource for a first physical shared channel; selecting a second resource for a second physical shared channel; and determining a physical feedback channel occasion for the first physical shared channel. For example, the physical feedback channel occasion may be determined based on a channel access time for accessing the second resource after the first resource.

In one embodiment, provided is a non-transitory computer-readable storage medium recording instructions. For example, the instructions, based on being executed, cause a first device to perform operations comprising: selecting a first resource for a first physical shared channel; selecting a second resource for a second physical shared channel; and determining a physical feedback channel occasion for the first physical shared channel. For example, the physical feedback channel occasion may be determined based on a channel access time for accessing the second resource after the first resource.

### BRIEF DESCRIPTION OF THE DRAWINGS

FIG. 1 shows a communication structure that can be provided in the 6G system, based on an embodiment of the present disclosure.
FIG. 2 shows an electromagnetic spectrum, based on an embodiment of the present disclosure.
FIG. 3 shows an example of an NTN typical scenario based on a transparent payload, based on an embodiment of the present disclosure.
FIG. 4 shows an example of an NTN typical scenario based on a regenerative payload, based on an embodiment of the present disclosure.
FIG. 5 shows an example of a sensing operation, based on an embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a transmission mode, based on an embodiment of the present disclosure.
FIG. 9 shows an example of a wireless communication system supporting an unlicensed band, based on an embodiment of the present disclosure.
FIG. 10 shows a method of occupying resources in an unlicensed band, based on an embodiment of the present disclosure.
FIG. 11 shows a case in which plurality of LBT-SBs are included in an unlicensed band, based on an embodiment of the present disclosure.
FIG. 12 shows CAP operations performed by a base station to transmit a downlink signal through an unlicensed band, based on an embodiment of the present disclosure.
FIG. 13 shows type 1 CAP operations performed by a UE to transmit an uplink signal, based on an embodiment of the present disclosure.
FIG. 14 shows a channel access procedure, based on an embodiment of the present disclosure.
FIG. 15 shows a method for obtaining a shared channel occupancy time (COT) of a UE in an unlicensed band, based on an embodiment of the present disclosure.
FIG. 16 shows a method for determining a physical feedback channel occasion based on a channel access time, according to an embodiment of the present disclosure.
FIG. 17 shows a method for determining a physical feedback channel occasion based on a channel access time, according to an embodiment of the present disclosure.
FIG. 18 shows a method for performing wireless communication by a first device, based on an embodiment of the present disclosure.
FIG. 19 shows a method for performing wireless communication by a second device, based on an embodiment of the present disclosure.
FIG. 20 shows a communication system 1, based on an embodiment of the present disclosure.
FIG. 21 shows wireless devices, based on an embodiment of the present disclosure.
FIG. 22 shows a signal process circuit for a transmission signal, based on an embodiment of the present disclosure.
FIG. 23 shows another example of a wireless device, based on an embodiment of the present disclosure.
FIG. 24 shows a hand-held device, based on an embodiment of the present disclosure.
FIG. 25 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

In the present disclosure, "configured or defined" may be interpreted as being configured or pre-configured to a device through pre-defined signaling (e.g., SIB, MAC, RRC) from a base station or network. In the present disclosure, "configured or defined" may be interpreted as being pre-configured to a device.

The technology proposed in the present disclosure may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), long term evolution (LTE), 5G NR, and so on.

The technology proposed in the present disclosure may be implemented as 6G wireless technology and may be applied to various 6G systems. For example, 6G systems may have key factors such as enhanced mobile broadband (eMBB), ultra-reliable low latency communications (URLLC), massive machine-type communication (mMTC), artificial intelligence (AI) unified communications, tactile internet, high throughput, high network capacity, high energy efficiency, low backhaul and access network congestion, and enhanced data security.

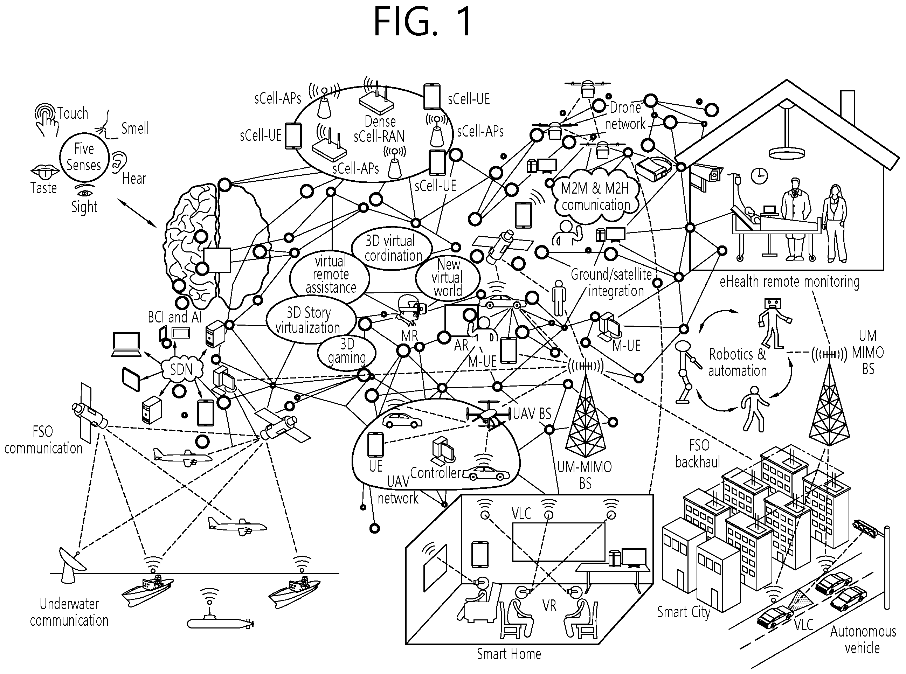

FIG. 1 shows a communication structure that can be provided in the 6G system, based on an embodiment of the present disclosure. The embodiment of FIG. 1 may be combined with various embodiments of the present disclosure.

New network characteristics in 6G may include:
- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each procedure of signal processing, which will be described below).
- Seamless integration wireless information and energy transfer
- Ubiquitous super 3D connectivity: Access to drones, networks for very low Earth orbit satellites and core network functions will create super 3D connectivity in 6G ubiquitous.

In the above new network characteristics of 6G, some general requirements may be as follows.
- Small cell networks
- Ultra-dense heterogeneous network
- High-capacity backhaul
- Radar technology integrated with mobile technology: High-precision localization (or location-based services) through communication is one of the functions of the 6G wireless communication system. Therefore, radar systems will be integrated with 6G networks.
- Softwarization and virtualization

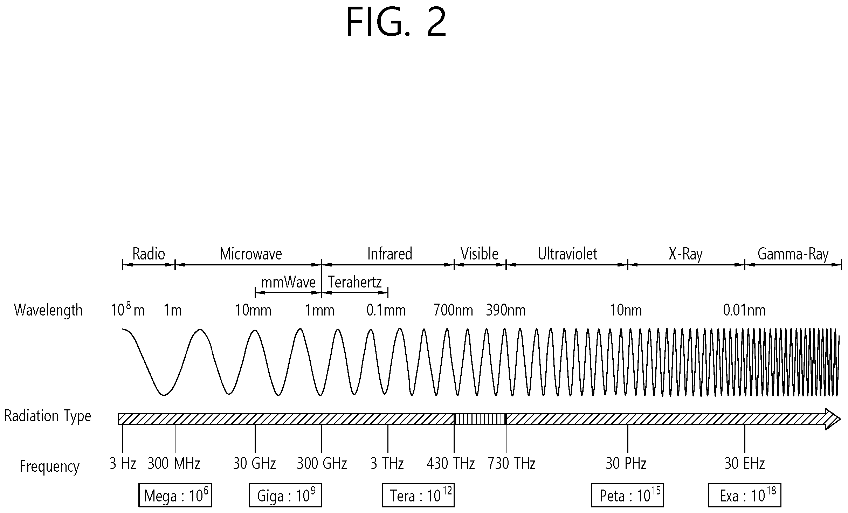

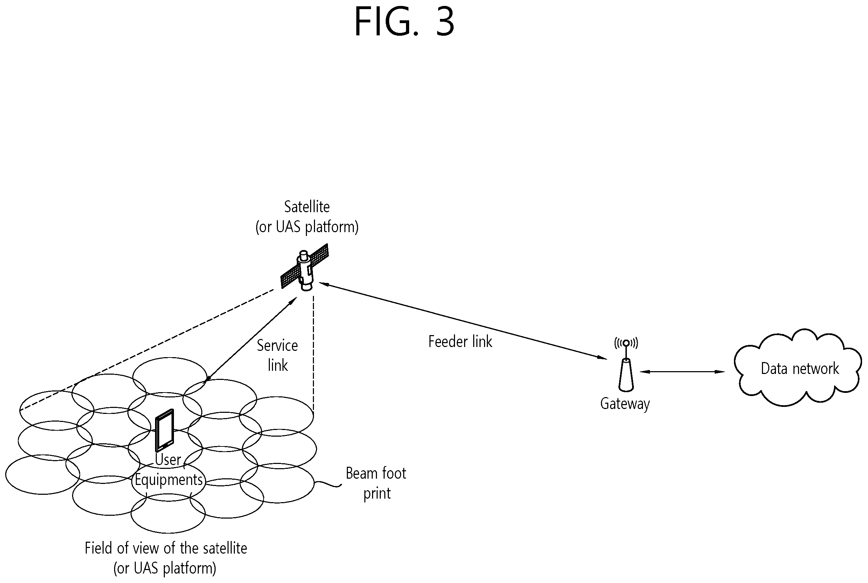

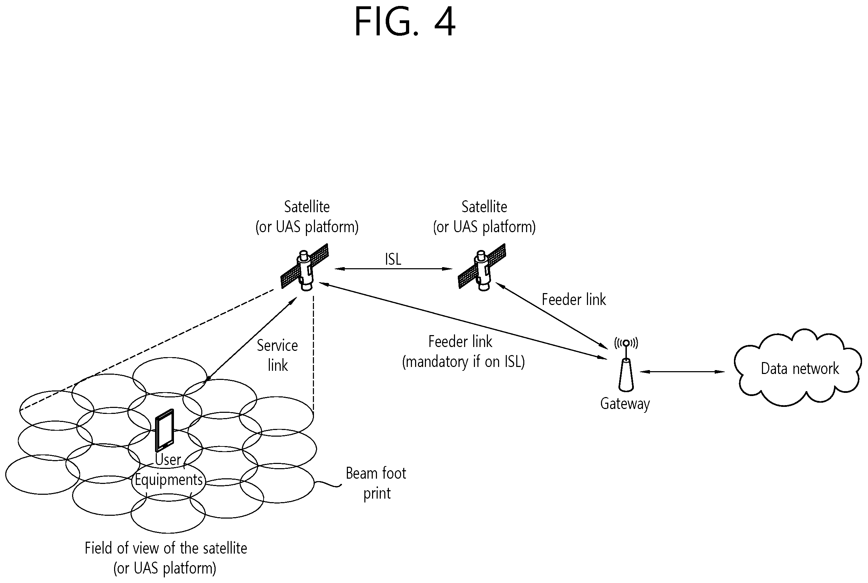

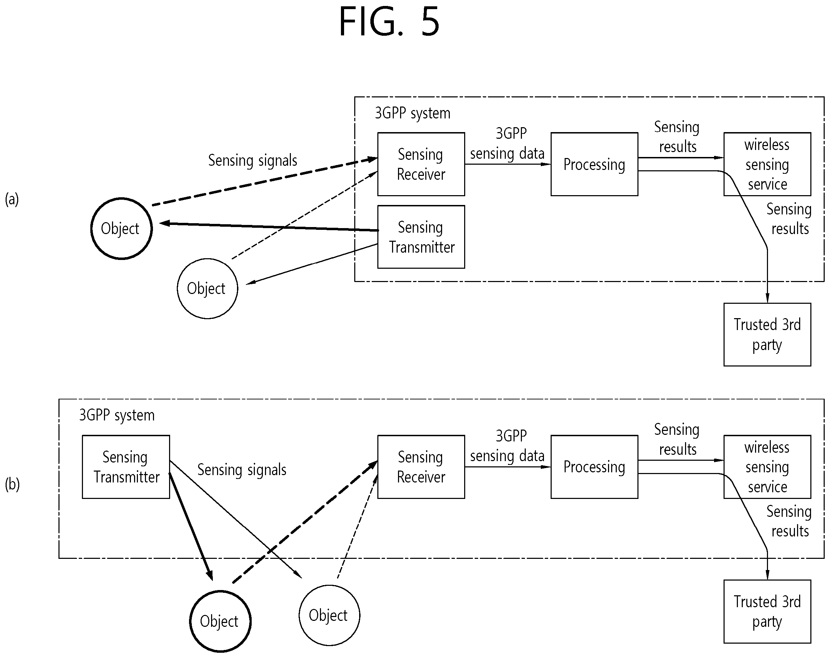

The following describes the key enabling technologies for 6G systems.
- Artificial Intelligence: The introduction of AI in telecommunications can streamline and improve real-time data transfer. AI can use numerous analytics to determine how complex target tasks are performed, meaning AI can increase efficiency and reduce processing delays. Time-consuming tasks such as handover, network selection, and resource scheduling can be done instantly by using AI. AI can also play an important role in M2M, machine-to-human, and human-to-machine communications. In addition, AI can be a rapid communication in Brain Computer Interface (BCI). AI-based communication systems can be supported by metamaterials, intelligent structures, intelligent networks, intelligent devices, intelligent cognitive radios, self-sustaining wireless networks, and machine learning.
- THz Communication (terahertz communication): Data rates can be increased by increasing bandwidth. This can be accomplished by using sub-THz communication with a wide bandwidth and applying advanced massive MIMO technology. THz waves, also known as submillimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. Of the defined THz band, 300 GHz-3 THz is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 illustrates an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies, for which highly directive antennas are indispensable. The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO Technology (Large-scale MIMO)
- Hologram Beamforming (HBF, Hologram Beamforming)
- Optical wireless technology
- Free-space optical transmission backhaul network (FSO Backhaul Network)
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- Unmanned aerial vehicles (UAVs): UAVs or drones will be an important component of 6G wireless communications. In most cases, high-speed data wireless connectivity may be provided using UAV technology. Base Station (BS) entities may be installed on UAVs to provide cellular connectivity. UAVs may have certain features not found in fixed BS infrastructure, such as easy deployment, strong line-of-sight links, and controlled degrees of freedom for mobility. During emergencies, such as natural disasters, the deployment of terrestrial telecom infrastructure is not economically feasible and sometimes cannot provide services in volatile environments. UAVs can easily handle these situations. UAVs will be a new paradigm in wireless communications. This technology facilitates the three basic requirements of wireless networks, which are eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Advanced air mobility (AAM): AAM is the parent concept of urban air mobility (UAM), which is a means of air transportation that can be used in urban centers, and can refer to a means of transportation that includes movement between urban centers and regional bases.
- Autonomous Driving (autonomous driving, self-driving): Vehicle to Everything (V2X), a key element in building an autonomous driving infrastructure, can be a technology that enables vehicles to communicate and share information with various elements on the road, such as vehicle-to-vehicle (V2V) and vehicle-to-infrastructure (V2I) wireless communication, in order to perform autonomous driving. In order to maximize the performance of autonomous driving and ensure high safety, fast transmission speeds and low latency technologies are essential. In addition, in the future, autonomous driving may need to go beyond delivering warnings or guidance messages to the driver and actively intervene in vehicle operation, requiring direct control of the vehicle in dangerous situations. To do this, the amount of information that needs to be transmitted and received can be massive, so 6G is expected to maximize autonomous driving with faster transmission speeds and lower latency than 5G.
- Non-terrestrial networks (NTN): An NTN may represent a network or network segment that uses radio frequency (RF) resources mounted on a satellite (or unmanned aerial system (UAS) platform). FIG. 3 shows an example of an NTN typical scenario based on a transparent payload, based on an embodiment of the present disclosure. FIG. 4 shows an example of an NTN typical scenario based on a regenerative payload, based on an embodiment of the present disclosure. The embodiment of FIG. 3 or FIG. 4 may be combined with various embodiments of the present disclosure. Referring to FIG. 3, a satellite (or UAS platform) may establish a service link with a UE. The satellite (or UAS platform) may be connected to the gateway via a feeder link. The satellite may be connected to the data network via the gateway. A beam footprint may refer to an area that can receive signals transmitted by a satellite. Referring to FIG. 4, a satellite (or UAS platform) may create a service link with a UE. A satellite (or UAS platform) connected to a UE may be connected to other satellites (or UAS platforms) via inter-satellite links (ISL). Other satellites (or UAS platforms) can be connected to the gateway via feeder links. Satellites may be connected to data networks via other satellites and gateways, based on the regenerative payload. If an ISL does not exist between a satellite and another satellite, a feeder link between the satellite and the gateway may be required. FIG. 3 and FIG. 4 are only examples of NTN scenarios, and NTN can be implemented based on various types of scenarios. For example, a satellite (or UAS platform) may implement a transparent or regenerative (with on-board processing) payload. For example, a satellite (or UAS platform) may generate multiple beams over a designated service area based on the field of view of the satellite (or UAS platform). For example, the field of view of the satellite (or UAS platform) may be different based on the on-board antenna diagram and the minimum elevation angle. For example, transparent payloads may include radio frequency filtering, frequency conversion, and amplification. Accordingly, the waveform signal repeated by the payload may not be changed. For example, a regenerative payload may include radio frequency filtering, frequency conversion and amplification, demodulation/decryption, switching and/or routing, and coding/modulation. For example, a regenerative payload may be substantially equivalent to equipping a satellite (or UAS platform) with all or part of the base station functionality.
- Integrated sensing and communication (ISAC): Wireless sensing is a technology that obtains information about the environment and/or the characteristics of objects within the environment by using radio frequencies to determine the instantaneous linear speed, angle, and distance (range) of the object. Since the radio frequency sensing function does not require connection to the object through a device in the network, it can provide a service for determining the location of the object without a device. The function to obtain range, speed, and angle information from radio frequency signals can provide a wide range of new capabilities, such as detection of various objects, object recognition (e.g., vehicles, humans, animals, UAVs), and high-precision positioning, tracking, and activity recognition. Wireless sensing services can provide information to various industries (e.g., unmanned aerial vehicles, smart homes, V2X, factories, railroads, public safety, etc.), enabling applications that provide, for example, intruder detection, assisted vehicle control and navigation, trajectory tracking, collision avoidance, traffic management, health and traffic management, etc. In some cases, wireless sensing may use non-3GPP type sensors (e.g., radar, cameras) to further support 3GPP-based sensing. For example, the operation of a wireless sensing service, that is, the sensing operation, may depend on the processing of transmission, reflection, and scattering of wireless sensing signals. Therefore, wireless sensing may provide an opportunity to enhance existing communication systems from communication networks to wireless communication and sensing networks. FIG. 5 shows an example of a sensing operation, based on an embodiment of the present disclosure. The embodiment of FIG. 5 may be combined with various embodiments of the present disclosure. Specifically, (a) of FIG. 5 illustrates an example of sensing using a sensing receiver and a sensing transmitter at the same location (e.g., monostatic sensing), and (b) of FIG. 5 illustrates an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

The physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC _INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

A radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or extened CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

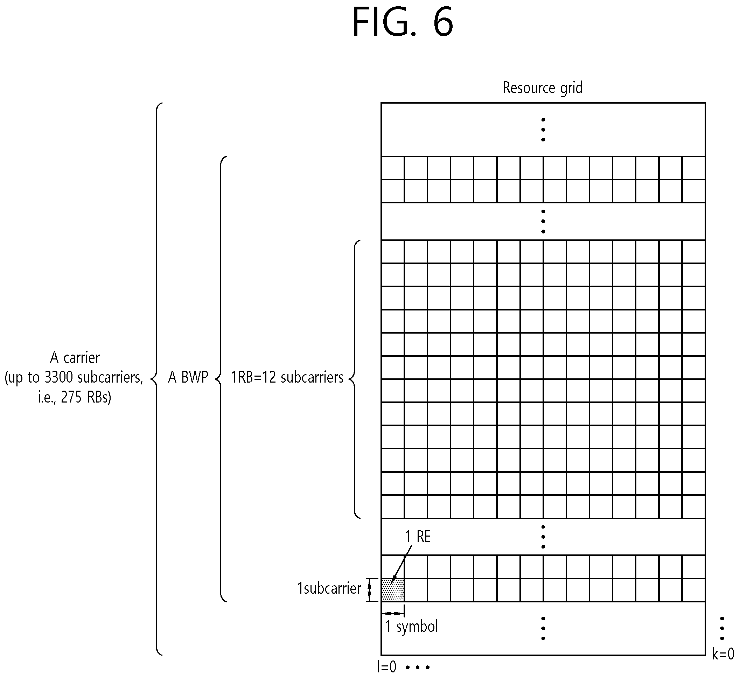

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier.

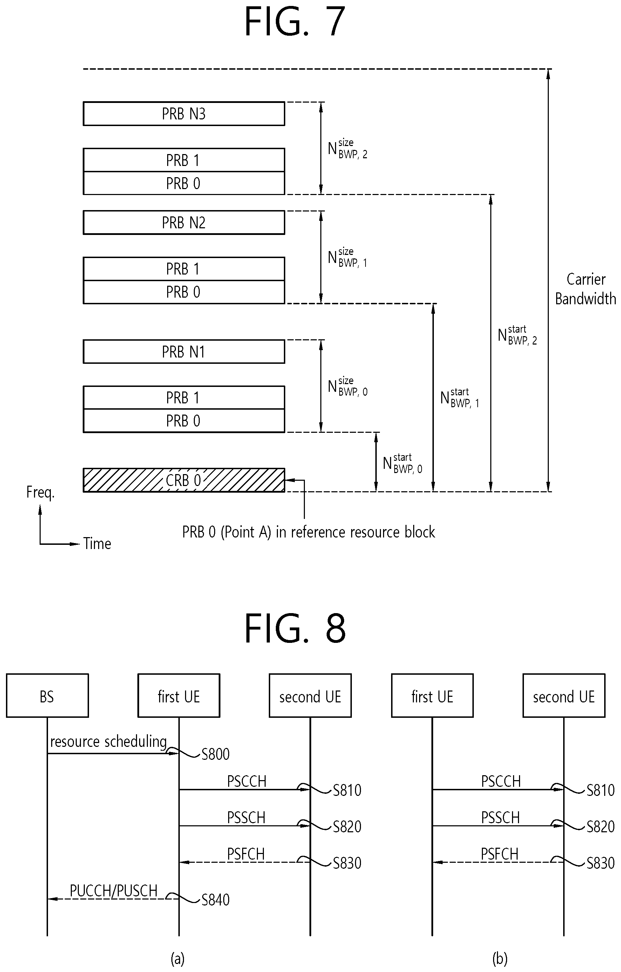

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL) -specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In the present disclosure, PSCCH may be replaced with a control channel, a physical control channel, a control channel related to the sidelink, a physical control channel related to the sidelink, etc. In the present disclosure, PSSCH may be replaced with a shared channel, a physical shared channel, a shared channel related to a sidelink, a physical shared channel related to a sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in the resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 8, in the resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Hereinafter, a wireless communication system supporting an unlicensed band/shared spectrum will be described.

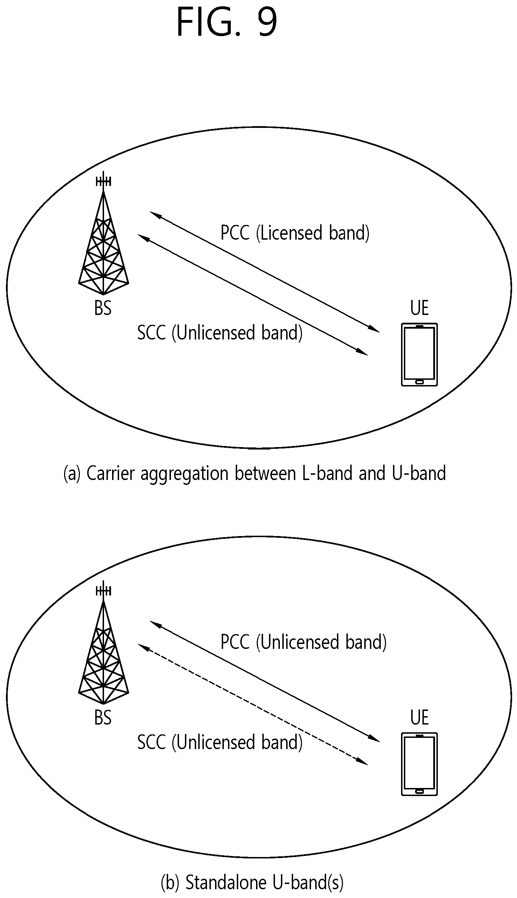

FIG. 9 shows an example of a wireless communication system supporting an unlicensed band, based on an embodiment of the present disclosure. For example, FIG. 9 may include an unlicensed spectrum (NR-U) wireless communication system. The embodiment of FIG. 9 may be combined with various embodiments of the present disclosure.

In the following description, a cell operating in a licensed band (hereinafter, L-band) may be defined as an L-cell, and a carrier of the L-cell may be defined as a (DL/UL/SL) LCC. In addition, a cell operating in an unlicensed band (hereinafter, U-band) may be defined as a U-cell, and a carrier of the U-cell may be defined as a (DL/UL/SL) UCC. The carrier/carrier-frequency of a cell may refer to the operating frequency (e.g., center frequency) of the cell. A cell/carrier (e.g., CC) is commonly called a cell.

When the base station and the UE transmit and receive signals on carrier-aggregated LCC and UCC as shown in (a) of FIG. 9, the LCC and the UCC may be configured as a primary CC (PCC) and a secondary CC (SCC), respectively. The base station and the UE may transmit and receive signals on one UCC or on a plurality of carrier-aggregated UCCs as shown in (b) of FIG. 9. In other words, the base station and the UE may transmit and receive signals only on UCC(s) without using any LCC. For a standalone operation, PRACH transmission, PUCCH transmission, PUSCH transmission, SRS transmission, etc. may be supported on a UCell.

In the embodiment of FIG. 9, the base station may be replaced with the UE. In this case, for example, PSCCH transmission, PSSCH transmission, PSFCH transmission, S-SSB transmission, etc. may be supported on a UCell.

Unless otherwise noted, the definitions below are applicable to the following terminologies used in the present disclosure.
- Channel: a carrier or a part of a carrier composed of a contiguous set of RBs in which a channel access procedure is performed in a shared spectrum.
- Channel access procedure (CAP): a procedure of assessing channel availability based on sensing before signal transmission in order to determine whether other communication node(s) are using a channel. A basic sensing unit is a sensing slot with a duration of Tsl = 9 us. The base station or the UE senses a channel during a sensing slot duration. If power detected for at least 4 us within the sensing slot duration is less than an energy detection threshold Xₜₕᵣₑₛₕ, the sensing slot duration Tsl is considered to be idle. Otherwise, the sensing slot duration Tsl = 9 us is considered to be busy. CAP may also be referred to as listen before talk (LBT).
- Channel occupancy: transmission(s) on channel(s) by the base station/UE after a channel access procedure.
- Channel occupancy time (COT): a total time during which the base station/UE and any base station/UE(s) sharing channel occupancy can perform transmission(s) on a channel after the base station/UE perform a channel access procedure. In the case of determining COT, if a transmission gap is less than or equal to 25 us, the gap duration may be counted in the COT. The COT may be shared for transmission between the base station and corresponding UE(s).
- DL transmission burst: a set of transmissions without any gap greater than 16 us from the base station. Transmissions from the base station, which are separated by a gap exceeding 16 us are considered as separate DL transmission bursts. The base station may perform transmission(s) after a gap without sensing channel availability within a DL transmission burst.
- UL or SL transmission burst: a set of transmissions without any gap greater than 16 us from the UE. Transmissions from the UE, which are separated by a gap exceeding 16 us are considered as separate UL or SL transmission bursts. The UE may perform transmission(s) after a gap without sensing channel availability within a UL or SL transmission burst.
- Discovery burst: a DL transmission burst including a set of signal(s) and/or channel(s) confined within a window and associated with a duty cycle. In the LTE-based system, the discovery burst may be transmission(s) initiated by the base station, which includes PSS, an SSS, and cell-specific RS (CRS) and further includes non-zero power CSI-RS. In the NR-based system, the discover burst may be transmission(s) initiated by the base station, which includes at least an SS/PBCH block and further includes CORESET for a PDCCH scheduling a PDSCH carrying SIB1, the PDSCH carrying SIB1, and/or non-zero power CSI-RS.

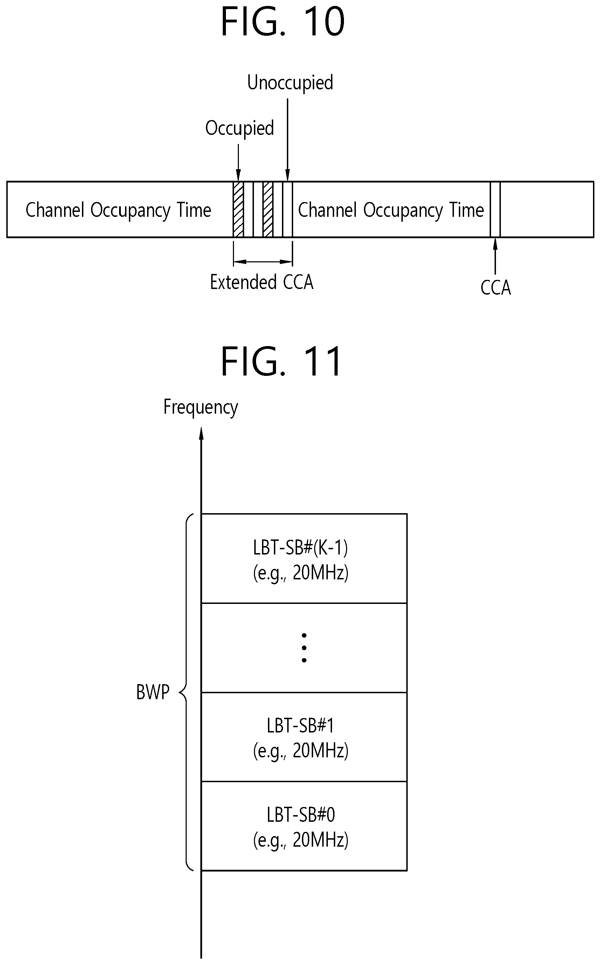

FIG. 10 shows a method of occupying resources in an unlicensed band, based on an embodiment of the present disclosure. The embodiment of FIG. 10 may be combined with various embodiments of the present disclosure.

Referring to FIG. 10, a communication node (e.g., base station, UE) within an unlicensed band should determine whether other communication node(s) is using a channel before signal transmission. To this end, the communication node within the unlicensed band may perform a channel access procedure (CAP) to access channel(s) on which transmission(s) is performed. The channel access procedure may be performed based on sensing. For example, the communication node may perform carrier sensing (CS) before transmitting signals so as to check whether other communication node(s) perform signal transmission. When the other communication node(s) perform no signal transmission, it is said that clear channel assessment (CCA) is confirmed. If a CCA threshold (e.g., X_{Thresh}) is predefined or configured by a higher layer (e.g., RRC), the communication node may determine that the channel is busy if the detected channel energy is higher than the CCA threshold. Otherwise, the communication node may determine that the channel is idle. If it is determined that the channel is idle, the communication node may start the signal transmission in the unlicensed band. The CAP may be replaced with the LBT.

Table 3 shows an example of the channel access procedure (CAP) supported in NR-U.

**[Table 3]**

| | Type | Explanation |
|---|---|---|
| DL | Type 1 CAP | CAP with random back-off |
| | | - time duration spanned by the sensing slots that are sensed to be idle before a downlink transmission(s) is random |
| | Type 2 CAP - Type 2A, 2B, 2C | CAP without random back-off |
| | | - time duration spanned by sensing slots that are sensed to be idle before a downlink transmission(s) is deterministic |
| UL or SL | Type 1 CAP | CAP with random back-off |
| | | - time duration spanned by the sensing slots that are sensed to be idle before an uplink or sidelink transmission(s) is random |
| | Type 2 CAP | CAP without random back-off |
| | - Type 2A, 2B, 2C | - time duration spanned by sensing slots that are sensed to be idle before an uplink or sidelink transmission(s) is deterministic |

Referring to Table 3, the LBT type or CAP for DL/UL/SL transmission may be defined. However, Table 3 is only an example, and a new type or CAP may be defined in a similar manner. For example, the type 1 (also referred to as Cat-4 LBT) may be a random back-off based channel access procedure. For example, in the case of Cat-4, the contention window may change. For example, the type 2 can be performed in case of COT sharing within COT acquired by the base station (gNB) or the UE.

Hereinafter, LBT-SubBand (SB) (or RB set) will be described.

In a wireless communication system supporting an unlicensed band, one cell (or carrier (e.g., CC)) or BWP configured for the UE may have a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information.

FIG. 11 shows a case in which a plurality of LBT-SBs are included in an unlicensed band, based on an embodiment of the present disclosure. The embodiment of FIG. 11 may be combined with various embodiments of the present disclosure.

Referring to FIG. 11, a plurality of LBT-SBs may be included in the BWP of a cell (or carrier). An LBT-SB may have, for example, a 20-MHz band. The LBT-SB may include a plurality of contiguous (P)RBs in the frequency domain, and thus may be referred to as a (P)RB set. While not shown, a guard band (GB) may be interposed between LBT-SBs. Accordingly, the BWP may be configured in the form of {LBT-SB #0 (RB set #0)+GB #0+LBT-SB #1 (RB set #1+GB #1) + ... +LBT-SB #(K-1) (RB set (#K-1))}. For convenience, LBT-SB/RB indexes may be configured/defined in an increasing order from the lowest frequency to the highest frequency.

Hereinafter, a channel access priority class (CAPC) will be described.

The CAPCs of MAC CEs and radio bearers may be fixed or configured to operate in FR1:
- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 4 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

**[Table 4]**

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Hereinafter, a method of transmitting a downlink signal through an unlicensed band will be described. For example, a method of transmitting a downlink signal through an unlicensed band may be applied to a method of transmitting a sidelink signal through an unlicensed band.

The base station may perform one of the following channel access procedures (e.g., CAP) for downlink signal transmission in an unlicensed band.

### (1) Type 1 downlink (DL) CAP Method

In the type 1 DL CAP, the length of a time duration spanned by sensing slots sensed to be idle before transmission(s) may be random. The type 1 DL CAP may be applied to the following transmissions:
- Transmission(s) initiated by the base station including (i) a unicast PDSCH with user plane data or (ii) the unicast PDSCH with user plane data and a unicast PDCCH scheduling user plane data, or
- Transmission(s) initiated by the base station including (i) a discovery burst only or (ii) a discovery burst multiplexed with non-unicast information.

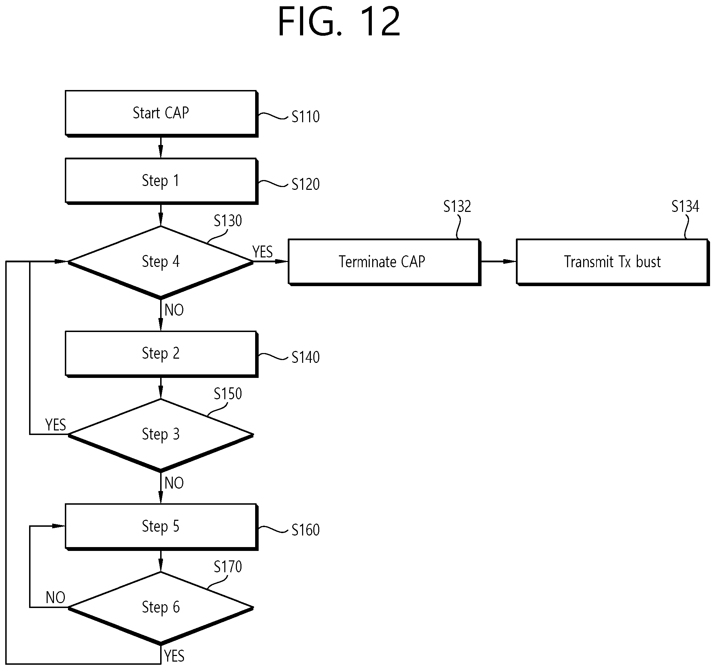

FIG. 12 shows CAP operations performed by a base station to transmit a downlink signal through an unlicensed band, based on an embodiment of the present disclosure. The embodiment of FIG. 12 may be combined with various embodiments of the present disclosure.

Referring to FIG. 12, the base station may sense whether a channel is idle for sensing slot durations of a defer duration Td. Then, if a counter N is zero, the base station may perform transmission (S134). In this case, the base station may adjust the counter N by sensing the channel for additional sensing slot duration(s) according to the following steps:

Step 1) (S120) The base station sets N to Nᵢₙᵢₜ (N= Nᵢₙᵢₜ), where Nᵢₙᵢₜ is a random number uniformly distributed between 0 and CWₚ. Then, step 4 proceeds.

Step 2) (S140) If N>0 and the base station determines to decrease the counter, the base station sets N to N-1 (N=N-1).

Step 3) (S150) The base station senses the channel for the additional sensing slot duration. If the additional sensing slot duration is idle (Y), step 4 proceeds. Otherwise (N), step 5 proceeds.

Step 4) (S130) If N=0 (Y), the base station terminates the CAP (S132). Otherwise (N), step 2 proceeds.

Step 5) (S160) The base station senses the channel until either a busy sensing slot is detected within an additional defer duration T_{d} or all the slots of the additional defer duration T_{d} are detected to be idle.

Step 6) (S170) If the channel is sensed to be idle for all the slot durations of the additional defer duration Td (Y), step 4 proceeds. Otherwise (N), step 5 proceeds.

Table 5 shows that mₚ, a minimum contention window (CW), a maximum CW, a maximum channel occupancy time (MCOT), and an allowed CW size, which are applied to the CAP, vary depending on channel access priority classes.

**[Table 5]**

| Channel Access Priority Class (p) | mₚ | CW_{min,p} | CW_{max,p} | T_{mcot,p} | allowed CWₚ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 5, a contention window size (CWS), a maximum COT value, etc. for each CAPC may be defined. For example, T_{d} may be equal to Tr+ mₚ * Tₛₗ(T_{d} = T_{f}+mₚ*Tₛₗ).

The defer duration T_{d} is configured in the following order: duration T_{f}(16 us) + mp consecutive sensing slot durations Tₛₗ(9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on HARQ-ACK feedback (e.g., the ratio of ACK or NACK) for a previous DL burst (e.g., PDSCH) (CW size update). For example, CWₚ may be initialized to CW_{min,p} based on the HARQ-ACK feedback for the previous DL burst. Alternatively, CWₚ may be increased to the next higher allowed value or maintained as it is.

### (2) Type 2 downlink (DL) CAP Method

In the type 2 DL CAP, the length of a time duration spanned by sensing slots sensed to be idle before transmission(s) may be determined. The type 2 DL CAP is classified into type 2A/2B/2C DL CAPs.

The type 2A DL CAP may be applied to the following transmissions. In the type 2A DL CAP, the base station may perform transmission immediately after the channel is sensed to be idle at least for a sensing duration T_{short_dl} = 25 us. Herein, T_{short_dl} includes the duration T_{f}(=16 us) and one sensing slot duration immediately after the duration T_{f}, where the duration T_{f} includes a sensing slot at the beginning thereof.
- Transmission(s) initiated by the base station including (i) a discovery burst only or (ii) a discovery burst multiplexed with non-unicast information, or
- Transmission(s) by the base station after a gap of 25 us from transmission(s) by the UE within a shared channel occupancy.

The type 2B DL CAP is applicable to transmission(s) performed by the base station after a gap of 16 us from transmission(s) by the UE within a shared channel occupancy time. In the type 2B DL CAP, the base station may perform transmission immediately after the channel is sensed to be idle for T_{f} = 16 us. T_{f} includes a sensing slot within 9 us from the end of the duration. The type 2C DL CAP is applicable to transmission(s) performed by the base station after a maximum of 16 us from transmission(s) by the UE within the shared channel occupancy time. In the type 2C DL CAP, the base station does not perform channel sensing before performing transmission.

Hereinafter, a method of transmitting an uplink signal through an unlicensed band will be described. For example, a method of transmitting an uplink signal through an unlicensed band may be applied to a method of transmitting a sidelink signal through an unlicensed band.

The UE may perform type 1 or type 2 CAP for UL signal transmission in an unlicensed band. In general, the UE may perform the CAP (e.g., type 1 or type 2) configured by the base station for UL signal transmission. For example, a UL grant scheduling PUSCH transmission (e.g., DCI formats 0_0 and 0_1) may include CAP type indication information for the UE.

### (1) Type 1 uplink (UL) CAP Method

In the type 1 UL CAP, the length of a time duration spanned by sensing slots sensed to be idle before transmission(s) is random. The type 1 UL CAP may be applied to the following transmissions.
- PUSCH/SRS transmission(s) scheduled and/or configured by the base station
- PUCCH transmission(s) scheduled and/or configured by the base station
- Transmission(s) related to a random access procedure (RAP)

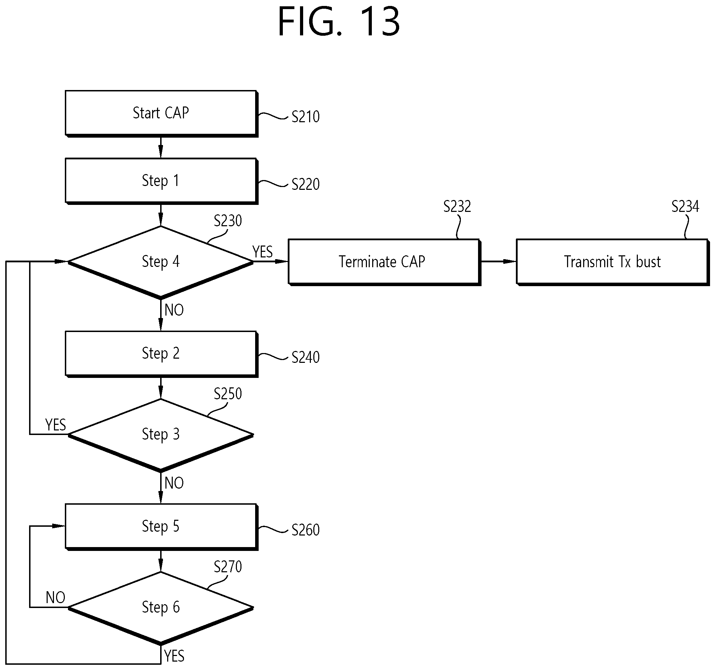

FIG. 13 shows type 1 CAP operations performed by a UE to transmit an uplink signal, based on an embodiment of the present disclosure. The embodiment of FIG. 13 may be combined with various embodiments of the present disclosure.

Referring to FIG. 13, the UE may sense whether a channel is idle for sensing slot durations of a defer duration T_{d}. Then, if a counter N is zero, the UE may perform transmission (S234). In this case, the UE may adjust the counter N by sensing the channel for additional sensing slot duration(s) according to the following steps:
Step 1) (S220) The UE sets N to Nᵢₙᵢₜ (N = Nᵢₙᵢₜ), where Nᵢₙᵢₜ is a random number uniformly distributed between 0 and CWₚ. Then, step 4 proceeds.
Step 2) (S240) If N>0 and the UE determines to decrease the counter, the UE sets N to N-1 (N = N-1).
Step 3) (S250) The UE senses the channel for the additional sensing slot duration. If the additional sensing slot duration is idle (Y), step 4 proceeds. Otherwise (N), step 5 proceeds.
Step 4) (S230) If N=0 (Y), the UE terminates the CAP (S232). Otherwise (N), step 2 proceeds.
Step 5) (S260) The UE senses the channel until either a busy sensing slot is detected within an additional defer duration T_{d} or all the slots of the additional defer duration T_{d} are detected to be idle.
Step 6) (S270) If the channel is sensed to be idle for all the slot durations of the additional defer duration Td (Y), step 4 proceeds. Otherwise (N), step 5 proceeds.

Table 6 shows that mₚ, a minimum CW, a maximum CW, a maximum channel occupancy time (MCOT), and an allowed CW size, which are applied to the CAP, vary depending on channel access priority classes.

**[Table 6]**

| Channel Access Priority Class (p) | mₚ | CW_{min,p} | CW_{max,p} | T_{ulmcot,p} | allowed CWₚ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 6, a contention window size (CWS), a maximum COT value, etc. for each CAPC may be defined. For example, T_{d} may be equal to Tr+ mₚ * Tₛₗ(T_{d} = T_{f}+mₚ*Tₛₗ).

The defer duration Td is configured in the following order: duration T_{f}(16 us) + mp consecutive sensing slot durations Tₛₗ(9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on an explicit/implicit reception response for a previous UL burst (e.g., PUSCH) (CW size update). For example, CWₚ may be initialized to CW_{min,p} based on the explicit/implicit reception response for the previous UL burst. Alternatively, CWₚ may be increased to the next higher allowed value or maintained as it is.

### (2) Type 2 uplink (UL) CAP Method

In the type 2 UL CAP, the length of a time duration spanned by sensing slots sensed to be idle before transmission(s) may be determined. The type 2 UL CAP is classified into type 2A/2B/2C UL CAPs. In the type 2A UL CAP, the UE may perform transmission immediately after the channel is sensed to be idle at least for a sensing duration T_{short_dl} = 25 us. Herein, T_{short_dl} includes the duration T_{f}(=16 us) and one sensing slot duration immediately after the duration T_{f}. In the type 2A UL CAP, T_{f} includes a sensing slot at the beginning thereof. In the type 2B UL CAP, the UE may perform transmission immediately after the channel is sensed to be idle for the sensing duration T_{f}= 16 us. In the type 2B UL CAP, T_{f} includes a sensing slot within 9 us from the end of the duration. In the type 2C UL CAP, the UE does not perform channel sensing before performing transmission.

For example, according to the type 1 LBT-based NR-U operation, the UE having uplink data to be transmitted may select a CAPC mapped to 5QI of data, and the UE may perform the NR-U operation by applying parameters of the corresponding CAPC (e.g., minimum contention window size, maximum contention window size, mₚ, etc.). For example, the UE may select a backoff counter (BC) after selecting a random value between 0 and CW (e.g., the minimum CW and the maximum CW mapped to the CAPC). In this case, for example, the BC may be a positive integer less than or equal to the random value. The UE that senses a channel decrements BC by 1 when the channel is idle. When the BC becomes zero and the UE detects that the channel is idle for the time T_{d}(T_{d} = T_{f} +mₚ * Tₛₗ), the UE may attempt to transmit data by occupying the channel. For example, Tₛₗ(= 9 usec) is a basic sensing unit or sensing slots, and may include a measurement duration for at least 4 usec. For example, the front 9 usec of T_{f} (= 16 usec) may be configured to be Tₛₗ.

For example, according to the type 2 LBT-based NR-U operation, the UE may transmit data by performing the type 2 LBT (e.g., type 2A LBT, type 2B LBT, or type 2C LBT) within COT.

For example, the type 2A (also referred to as Cat-2 LBT (one shot LBT) or one-shot LBT) may be 25 usec one-shot LBT. In this case, transmission may start immediately after idle sensing for at least a 25 usec gap. The type 2A may be used to initiate transmission of SSB and non-unicast DL information. That is, the UE may sense a channel for 25 usec within COT, and if the channel is idle, the UE may attempt to transmit data by occupying the channel.

For example, the type 2B may be 16 usec one-shot LBT. In this case, transmission may start immediately after idle sensing for a 16 usec gap. That is, the UE may sense a channel for 16 usec within COT, and if the channel is idle, the UE may attempt to transmit data by occupying the channel.

For example, in the case of the type 2C (also referred to as Cat-1 LBT or No LBT), LBT may not be performed. In this case, transmission may start immediately after a gap of up to 16 usec and a channel may not be sensed before the transmission. The duration of the transmission may be up to 584 usec. The UE may attempt transmission after 16 usec without sensing, and the UE may perform transmission for up to 584 usec.

In a sidelink unlicensed band, the UE may perform a channel access operation based on Listen Before Talk (LBT). Before the UE accesses a channel in an unlicensed band, the UE should check whether the channel to be accessed is idle (e.g., a state in which UEs do not occupy the channel, a state in which UEs can access the corresponding channel and transmit data) or busy (e.g., a state in which the channel is occupied and data transmission/reception is performed on the corresponding channel, and the UE attempting to access the channel cannot transmit data while the channel is busy). That is, the operation in which the UE checks whether the channel is idle or busy may be referred to as Clear Channel Assessment (CCA), and the UE may check whether the channel is idle or busy for the CCA duration.

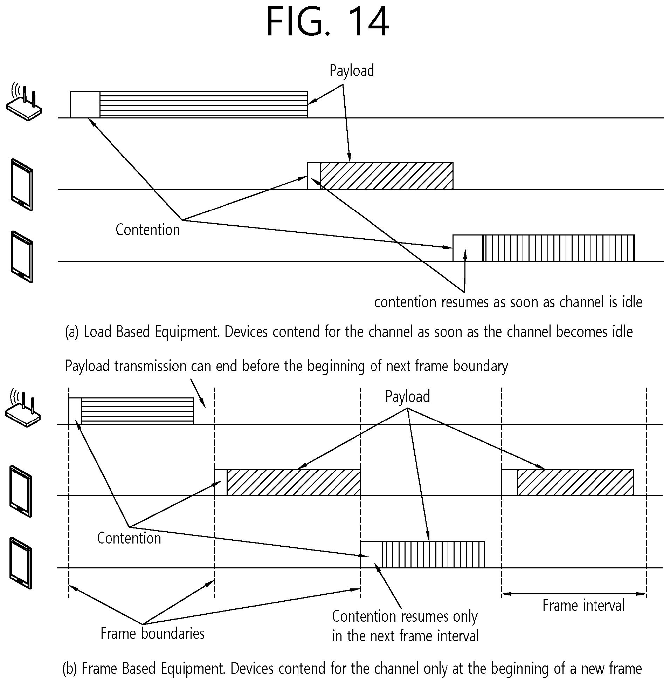

FIG. 14 shows a channel access procedure, based on an embodiment of the present disclosure. Specifically, (a) of FIG. 14 shows an example of a dynamic channel access procedure (load based equipment, LBE), and (b) of FIG. 14 shows an example of a semi-static channel access procedure (frame based equipment, FBE). The embodiment of FIG. 14 may be combined with various embodiments of the present disclosure.

Referring to (a) of FIG. 14, if a channel is idle, the UE may perform contention with other UEs on an unlicensed band to immediately occupy the channel. In addition, if the UE occupies the channel, the UE may transmit data.

Referring to (b) of FIG. 14, the UE may perform contention with other UEs on an unlicensed band at the last time within a synchronized frame boundary (or a fixed frame period (FFP)) (e.g., certain time before the start of the next FFP (or starting time)). In addition, if the UE occupies a channel within a fixed frame period (FFP), the UE may transmit data. The data transmission should complete before the next FFP begins.

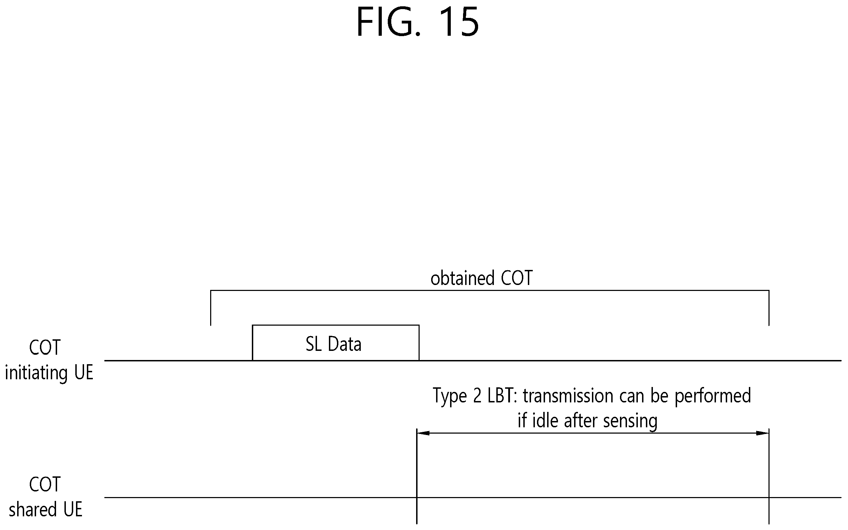

FIG. 15 shows a method for a UE to obtain a shared channel occupancy time (COT) in an unlicensed band according to an embodiment of the present disclosure. The embodiment of FIG. 15 may be combined with various embodiments of the present disclosure.

Referring to FIG. 15, the UE generating the shared COT (e.g., the COT initiating UE) may share the obtained COT with a counterpart UE as follows. For example, the UE generating/obtaining the COT may transmit the obtained shared COT to the counterpart UE through SCI or MAC CE or PC5-RRC message. For example, when the obtained shared COT is transmitted through the SCI, the obtained shared COT may be transmitted to a destination UE for a unicast link (a pair of an L1 source ID and an L1 destination ID), and the obtained shared COT may be transmitted to a destination UE for groupcast/broadcast (a groupcast/broadcast L1 destination ID). For example, when the obtained shared COT is transmitted through the MAC CE (e.g., SL COT information MAC CE), the obtained shared COT may be transmitted to a destination UE for a unicast link (a pair of an L1/L2 source ID and an L1/L2 destination ID), and the obtained shared COT may be transmitted to a destination UE for groupcast/broadcast (a groupcast/broadcast L1/L2 destination ID). For example, a UE that received the shared COT from the UE generating the shared COT (e.g., the COT responding UE) may perform type 2 LBT (for example, type 2A LBT or type 2B LBT: when the channel is confirmed to be idle for a certain time by performing a sensing operation, the UE may transmit SL data to be transmitted by itself within the shared COT; or, for example, type 2C LBT: the UE may transmit SL data immediately without sensing for a certain time) after the transmission of the UE generating the shared COT is completed within the shared COT.

For example, FIG. 15 illustrates an embodiment in which a UE shares a (shared) COT from a counterpart UE, but the UE may receive configuration of a (shared) COT to be used from a base station. Additionally, for example, a transmission UE to transmit sidelink data may directly generate a COT to be used and may perform type 2 LBT within the generated COT, and may transmit sidelink data within the generated COT.

For example, in SL-unlicensed spectrum (U), a UE may occupy a channel of a sidelink unlicensed band first in order to transmit SL data. For example, in order to occupy a channel of the sidelink unlicensed band, the UE may perform LBT (e.g., type 1 LBT: random backoff-based LBT) and may perform a process of finding a channel of the unlicensed band that is not occupied by the UE. For example, when the UE performing LBT discovers a channel that is not occupied by other UEs, the UE may occupy the corresponding channel and may perform transmission of SL data. For example, when the UE detects an LBT failure, the UE may adjust parameter values for performing LBT (e.g., contention window (CW) size) and may (re)perform LBT, and may continue to perform a process of finding a channel of the unlicensed band that is not occupied by the UE.

Meanwhile, according to the prior art, a PSFCH resource for a PSSCH may be automatically determined based on a resource related to a PSSCH transmission. However, when a PSFCH resource for receiving feedback for a PSSCH in an unlicensed band is determined only based on the resource related to the PSSCH transmission, the following problems may occur. For example, although each resource (e.g., a first resource and a second resource) for a plurality of PSSCH transmissions is generated, when a feedback resource for the first resource is located within a time duration in which an LBT related to the second resource is performed to perform a PSSCH transmission based on the second resource after the first resource, a probability of failure of the LBT procedure related to the second resource may increase. In this case, for example, when a transmission priority of data to be transmitted based on the second resource is higher than a transmission priority of data to be transmitted based on the first resource, a transmission of data having the higher priority may be delayed for feedback for data having the lower priority. Alternatively, for example, due to a failure of the LBT procedure for a resource generated in a time domain after a plurality of PSFCH occasions, a reliability of communication based on the unlicensed band may decrease. Alternatively, for example, since a resource selection procedure for transmission may be repeatedly performed due to the feedback resource that is automatically determined, an efficiency related to resource usage may decrease.

In the present disclosure, a method for resource (re-)selection and a device supporting the same are proposed as follows so that a UE may avoid an LBT (e.g., one shot LBT or consistent LBT) failure (e.g., a failure of a process of finding an unoccupied channel).

For example, when a transmission UE performs transmission of sidelink data (or a transport block (TB)), if a type 1 LBT duration for the data overlapping with a reserved resource (or a generated sidelink grant) related to another sidelink data to be transmitted by the transmission UE itself, the type 1 LBT failure may occur. Therefore, in the present disclosure, when performing transmission of sidelink data (or a transport block (TB)) by the transmission UE, UE operations are proposed as follows so that a type 1 LBT for the data may not fail due to a reserved resource (or a generated sidelink grant) related to another sidelink data to be transmitted by UE itself.

For example, when a transmission UE generates each sidelink grant for sidelink data 1 to be transmitted (e.g., the SL priority is "1") and sidelink data 2 to be transmitted (e.g., the SL priority is "2"), when determining a PSFCH occasion of the sidelink data 2, the transmission UE may exclude from resource selection a resource before N consecutive resources of the sidelink grant resource for the sidelink data 1 or a resource after N consecutive resources. That is, for example, when the transmission UE generates a sidelink grant (or selects a (re-)transmission resource) for the sidelink data 2 (e.g., sidelink data having a (layer 1) SL priority lower than that of the sidelink data 1), the transmission UE may exclude a resource that may block a (type 1) LBT of the sidelink data 1 (e.g., sidelink data having a (layer 1) SL priority higher than that of the sidelink data 2). Additionally, for example, the embodiment may be limitedly applied only when an SL channel access priority class (CAPC) value of the sidelink data 2 satisfies being greater than an SL channel access priority class (CAPC) value of the sidelink data 1 (e.g., the smaller the SL CAPC value, the higher the priority).

For example, in a state where a minimum timing of PSFCH on PSSCH (e.g., "PSSCH-to-PSFCH" (e.g., an interval between a PSSCH resource and a PSFCH resource)) is fixed, when performing resource (re-)selection for PSSCH transmission accompanied by PSFCH reception, the transmission UE may exclude or deprioritize from resource selection a candidate resource in which a location of a resource reserved by another UE (e.g., when confirmed through reception of SCI of another UE) or a resource previously selected or reserved by the transmission UE itself is likely to be located between the PSSCH and the PSFCH.

For example, when a transmission UE generates each sidelink grant for sidelink data 1 to be transmitted (e.g., sidelink data for which the SL priority is "1" and an HARQ feedback enabled MAC PDU or PSFCH transmission is required) and sidelink data 2 to be transmitted (e.g., sidelink data for which the SL priority is "2" and an HARQ feedback enabled MAC PDU or PSFCH transmission is required), when selecting a sidelink grant resource for the sidelink data 2, the transmission UE may exclude from resource selection a resource before N consecutive resources of the sidelink grant resource for the sidelink data 1 or a resource after N consecutive resources. That is, for example, when determining a PSFCH resource for the sidelink data 2 (e.g., sidelink data having a (layer 1) SL priority lower than that of the sidelink data 1), the transmission UE may exclude a resource that may block a (type 1) LBT of the sidelink data 1 (e.g., sidelink data having a (layer 1) SL priority higher than that of the sidelink data 2). Additionally, for example, the embodiment may be limitedly applied only when an SL channel access priority class (CAPC) value of the sidelink data 2 satisfies being greater than an SL channel access priority class (CAPC) value of the sidelink data 1 (e.g., the smaller the SL CAPC value, the higher the priority).

For example, when transmitting sidelink data (e.g., sidelink data for which PSSCH or PSFCH transmission is required), the transmission UE may perform a resource (re-)selection procedure that excludes N slot resources before (or after) a PSFCH transmission occasion related to the sidelink data (e.g., sidelink data for which PSSCH or PSFCH transmission is required). For example, the operation described above may be limitedly applied only when the priority of PSFCH/SL SSB is equal to or greater than a pre-configured threshold and/or when a (layer 1) SL priority of the sidelink data (or a packet, or a transport block (TB)) that the transmission UE attempts to transmit is higher than (or higher than or equal to) a (layer 1) SL priority of the PSFCH/the SL SSB. Additionally, for example, a (layer 1) SL priority of an SL SSB may be pre-configured by a base station, or a (layer 1) SL priority between an additional SL SSB and a sync SL SSB may be configured differently.

For example, when SL HARQ feedback related to sidelink data (e.g., PSSCH) transmitted by UE B is required, UE A may perform a resource (re-)selection procedure that excludes N slot resources before (or after) a PSFCH transmission occasion related to the SL HARQ feedback. For example, the operation described above may be limitedly applied only when a priority of PSFCH/SL SSB is equal to or greater than a pre-configured threshold and/or when a (layer 1) SL priority of sidelink data (or a packet, or a transport block (TB)) that the transmission UE attempts to transmit is higher than (or higher than or equal to) a (layer 1) SL priority of the PSFCH/the SL SSB. Additionally, for example, a (layer 1) SL priority of an SL SSB may be pre-configured by a base station, or a (layer 1) SL priority between an additional SL SSB and a sync SL SSB may be configured differently.

For example, when sidelink data A (e.g., PSSCH) that the UE has to transmit requires SL HARQ feedback, when (re-)selecting resource (or generating sidelink grant) for other sidelink data (e.g., sidelink data B, sidelink data C, etc.), the UE may perform a resource (re-)selection procedure (or a sidelink grant generation procedure) that excludes N slot resources before (or after) a PSFCH transmission occasion related to the SL HARQ feedback of the sidelink data A. For example, the operation described above may be limitedly applied only when a priority of PSFCH/SL SSB is equal to or greater than a pre-configured threshold and/or when a (layer 1) SL priority of sidelink data (or a packet, or a transport block (TB)) that the transmission UE attempts to transmit is higher than (or higher than or equal to) a (layer 1) SL priority of the PSFCH/the SL SSB. Additionally, for example, a (layer 1) SL priority of an SL SSB may be pre-configured by a base station, or a (layer 1) SL priority between an additional SL SSB and a sync SL SSB may be configured differently.

For example, when performing resource (re-)selection for sidelink data, the UE may perform a resource (re-)selection procedure (or a sidelink grant generation procedure) that excludes N slot resources before (or after) its SL SSB transmission occasion(s). Alternatively, when performing resource (re-)selection for sidelink data, the UE may always perform a resource (re-)selection procedure (or a sidelink grant generation procedure) that excludes N slot resources before (or after) its SL SSB transmission occasion(s). For example, the operation described above may be limitedly applied only when a priority of PSFCH/SL SSB is equal to or greater than a pre-configured threshold and/or when a (layer 1) SL priority of sidelink data (or a packet, or a transport block (TB)) that the transmission UE attempts to transmit is higher than (or higher than or equal to) a (layer 1) SL priority of the PSFCH/the SL SSB. Additionally, for example, a (layer 1) SL priority of an SL SSB may be pre-configured by a base station, or a (layer 1) SL priority between an additional SL SSB and a sync SL SSB may be configured differently.

For example, when performing LBT, the UE may perform the LBT in a remaining duration except for a PSFCH occasion and/or an SL SSB occasion. Additionally, for example, the UE may not perform counting of LBT failures for the PSFCH and the SL SSB (e.g., a procedure of increasing an LBT failure count).

For example, when UE A has an intention to share a channel occupancy time (COT) with UE B that transmits a PSFCH and/or an SL SSB in a specific PSFCH occasion or an SL SSB occasion, UE A may perform an operation of prioritizing resource (re-)selection before (or after) the PSFCH occasion or the SL SSB occasion. For example, such an operation of the UE may be limitedly applied only when a priority of a PSFCH and/or an SL SSB is equal to or greater than a pre-configured threshold and/or when a (layer 1) SL priority of sidelink data (or a packet, or a transport block (TB)) that the transmission UE attempts to transmit is higher than (or higher than or equal to) a (layer 1) SL priority of the PSFCH/the SL SSB. Additionally, for example, a (layer 1) SL priority of an SL SSB may be pre-configured by a base station, or a (layer 1) SL priority between an additional SL SSB and a sync SL SSB may be configured differently.

The sidelink data described in the present disclosure may include overall sidelink signaling including sidelink data, sidelink MAC CE, PC5 RRC message, PC5-S message (e.g., a direct communication request (DCR) message), a conflict indication between resources that a UE transmits through PSFCH in an Inter-UE Coordination (IUC) procedure, sidelink data or signaling for which PSFCH transmission is required, and so on.

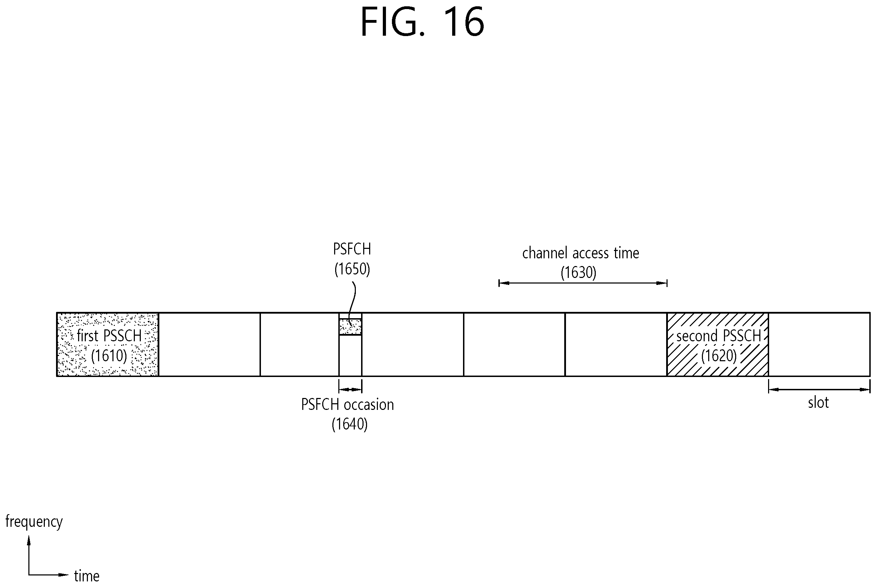

FIG. 16 shows a method for determining a physical feedback channel occasion based on a channel access time, according to an embodiment of the present disclosure. The embodiment of FIG. 16 may be combined with various embodiments of the present disclosure.

Referring to FIG. 16, a transmission UE may generate (or select) a resource (or a grant), and the resource (or the grant) may be generated (or selected) before generation of data (or a MAC PDU) to be transmitted by the transmission UE. For example, the transmission UE may generate (or select) a resource 1610 for transmission of a first PSSCH, and may generate (or select) a resource 1620 for transmission of a second PSSCH. And, for example, a PSFCH occasion including a PSFCH resource for receiving feedback for the transmission of the first PSSCH may be determined based on the generated (or selected) resource for the transmission of the first PSSCH (or a slot including the first PSSCH). Additionally, for example, a PSFCH occasion including a PSFCH resource for receiving feedback for the transmission of the first PSSCH may be determined based on a channel access time 1630 for accessing the resource 1620 for the transmission of the second PSSCH that is generated (or selected) after the resource 1610 for the transmission of the first PSSCH. For example, when a transmission UE generates (or selects) a resource 1610 for transmission of a first PSSCH, and generates (or selects) a resource 1620 for transmission of a second PSSCH after the resource for transmission of the first PSSCH in a time domain, and thereafter logical channel data mapped to each of the generated (or selected) resources occurs, if a transmission priority of data mapped to the resource 1620 for transmission of the second PSSCH is higher than a transmission priority of data mapped to the resource 1610 for transmission of the first PSSCH, a PSFCH occasion for the transmission of the first PSSCH may not be configured within a time duration in which a channel access operation (e.g., LBT) for success of channel access (e.g., LBT) related to the resource 1620 for transmission of the second PSSCH is performed. That is, for example, a PSFCH occasion 1640 for the transmission of the first PSSCH may be determined so as not to interfere with the channel access for the resource 1620 for transmission of the second PSSCH. That is, for example, the PSFCH occasion 1640 for the transmission of the first PSSCH may be determined in a time domain before a channel access time 1630 for the resource 1620 for transmission of the second PSSCH (or in a time domain other than the channel access time 1630 for the resource 1620 for transmission of the second PSSCH). For example, the channel access time 1630 may be determined based on N consecutive resources before the resource 1620 for transmission of the second PSSCH. In this case, for example, the N may be determined so that a time duration related to the N consecutive resources before the resource 1620 for transmission of the second PSSCH includes the channel access time 1630 for the resource 1620 for transmission of the second PSSCH. For example, based on the operation described above, the transmission UE may receive feedback for the transmission of the first PSSCH from a counterpart UE based on a PSFCH 1650 included in a PSFCH occasion 1640 related to the first PSSCH.

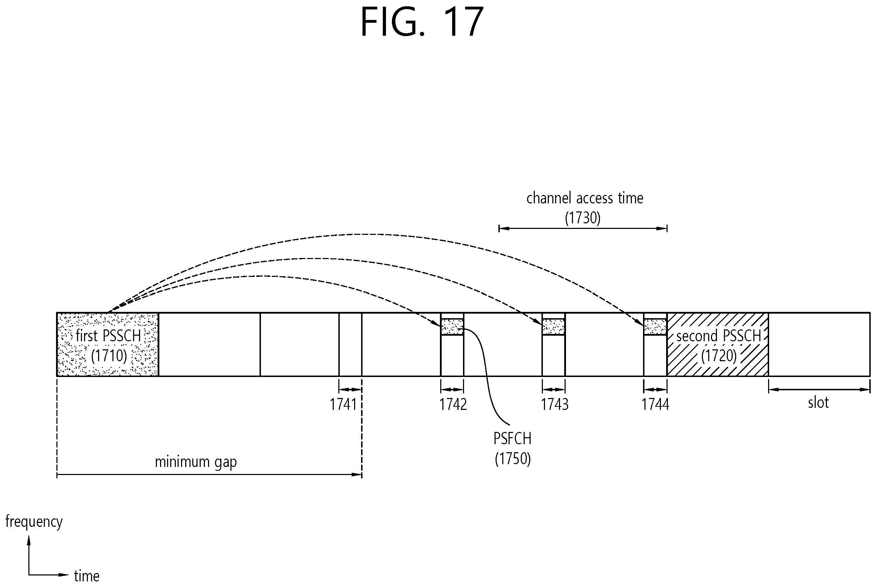

FIG. 17 shows a method for determining a physical feedback channel occasion based on a channel access time, according to an embodiment of the present disclosure. The embodiment of FIG. 17 may be combined with various embodiments of the present disclosure.

Referring to FIG. 17, an embodiment of FIG. 17 is an operation based on multiple PSFCH occasions. That is, for example, the embodiment of FIG. 16 described above may be extended as shown in the embodiment of FIG. 17. For example, a transmission UE may generate (or select) a resource 1710 for transmission of a first PSSCH, and may generate (or select) a resource 1720 for transmission of a second PSSCH after the resource for transmission of the first PSSCH. Additionally, for example, among a plurality of slots shown in FIG. 17, some slots may include resources 1741, 1742, 1743, and 1744 related to a PSFCH. For example, when a minimum gap (e.g., a minimum number of slots between a PSSCH transmission and a slot including a PSFCH resource) after the transmission of the first PSSCH is three slots, among the slots including the resources 1741, 1742, 1743, and 1744 related to the PSFCH, a slot including the resource 1741 related to the PSFCH within the minimum gap after the transmission of the first PSSCH may be excluded from determination of a slot including a PSFCH occasion for the first PSSCH. That is, for example, a slot including the resources 1742, 1743, and 1744 related to the PSFCH after the minimum gap may be determined as a slot including a PSFCH occasion for the first PSSCH (i.e., a candidate PSFCH occasion for the first PSSCH). Meanwhile, for example, when there are a plurality of PSFCH occasions satisfying the minimum gap for the first PSSCH, feedback for the first PSSCH may be received for each PSFCH occasion, but as shown in FIG. 17, when a resource 1720 for transmission of the second PSSCH is generated (or selected) after the resource 1710 for transmission of the first PSSCH, a PSFCH occasion for the first PSSCH may be determined based on a channel access time 1730 for accessing the resource 1720 for transmission of the second PSSCH. That is, for example, even when there are a plurality of PSFCH occasions satisfying a minimum gap for the first PSSCH according to a conventional 3GPP standard, among the plurality of PSFCH occasions, PSFCH occasions 1743 and 1744 included in slots overlapping with a channel access time 1730 for accessing a resource 1720 for transmission of the second PSSCH may be excluded from determination of a PSFCH occasion for the first PSSCH. For example, as in the embodiment of FIG. 16 described above, when a transmission priority of data mapped to the resource 1720 for transmission of the second PSSCH is higher than a transmission priority of data mapped to the resource 1710 for transmission of the first PSSCH, among a plurality of PSFCH occasions 1742, 1743, and 1744 for the first PSSCH, PSFCH occasions 1743 and 1744 overlapping with the channel access time 1730 for accessing the resource 1720 for transmission of the second PSSCH may be excluded to determine a PSFCH occasion 1742 for the first PSSCH. That is, for example, among a plurality of PSFCH occasions for the first PSSCH, the transmission UE may determine a PSFCH occasion that satisfies a minimum gap for determination of the PSFCH occasion from a slot related to the first PSSCH and does not interfere with a channel access operation (e.g., LBT) for accessing a resource for transmission of the second PSSCH after the resource for transmission of the first PSSCH as a PSFCH occasion 1742 for the first PSSCH, and may receive feedback for the first PSSCH from a counterpart UE based on a PSFCH 1750 included in the PSFCH occasion 1742.

Meanwhile, in conventional LTE V2X, a UE supporting multi-channel operation (e.g., multi-carrier operation or carrier aggregation (CA)) may select a specific carrier for transmitting sidelink data, and may select an available resource in the selected carrier and transmit the sidelink data through the selected resource and carrier.

In the present disclosure, a packet duplication operation of a multi-carrier supporting UE is proposed as follows.

For example, in sidelink multi-carrier operation, in order to improve reliability of packet transmission, for sidelink data whose reliability is equal to or greater than a pre-configured threshold (e.g., when an SL reliability value related to the sidelink data is smaller than an SL reliability threshold pre-configured to determine whether packet duplication is to be performed (i.e., the smaller the SL reliability value, the higher the required reliability of the sidelink data)), the transmission UE may duplicate the data (e.g., packet duplication) and may transmit it to a peer UE through a plurality of carriers (e.g., packet duplication may be performed at a packet data convergence protocol (PDCP) layer). For example, the SL reliability of the sidelink data may be pre-configured per logical channel of the data or per SL priority.

For example, in sidelink multi-carrier operation, in order to improve reliability of packet transmission, for sidelink data whose priority is equal to or greater than a pre-configured threshold (e.g., when an SL priority value related to the sidelink data is smaller than an SL priority threshold pre-configured to determine whether packet duplication is to be performed (i.e., the smaller the SL priority value, the higher the required reliability of the sidelink data)), the transmission UE may duplicate the data (e.g., packet duplication) and may transmit it to a peer UE through a plurality of carriers.

For example, when performing a packet duplication operation in multi-carrier, the UE may perform a discontinuous transmission (DTX) counting operation for declaring an SL radio link failure (RLF) as follows (e.g., numConsecutiveDTX: when a DTX occurs, the UE increases the parameter by 1, and when numConsecutiveDTX reaches sl-MaxNumConsecutiveDTX, the UE may declare an SL RLF for a PC5 RRC connection associated with a sidelink carrier or a sidelink BWP or a sidelink resource pool or a sidelink HARQ entity).

For example, a UE transmitting a PDCP duplicated sidelink packet may transmit a PSCCH/PSSCH on a plurality of sidelink carriers, and may also receive a PSFCH on a plurality of sidelink carriers. For example, in this case, when the UE receives a PSFCH (e.g., SL HARQ ACK/NACK feedback) for the PSCCH/PSSCH for the PDCP duplicated sidelink packet on only one of the plurality of sidelink carriers, the UE may not increase a DTX count (e.g., may not increase the DTX count by "1") even when the UE does not receive the PSFCH on another one of the plurality of sidelink carriers (e.g., since the PSFCH is received through another sidelink carrier, the UE does not perform an operation of increasing the DTX count for the sidelink carrier). For example, a UE transmitting a PDCP duplicated sidelink packet may transmit a PSCCH/PSSCH on a plurality of sidelink carriers, and may also receive a PSFCH on a plurality of sidelink carriers. For example, in this case, when the UE receives a PSFCH (e.g., SL HARQ ACK/NACK feedback) for the PSCCH/PSSCH for the PDCP duplicated sidelink packet on only one of the plurality of sidelink carriers, the UE may increase a DTX count (e.g., increase the DTX count by "1") for another one of the plurality of sidelink carriers on which the PSFCH is not received (e.g., the DTX count operation may be performed independently per sidelink carrier).

For example, a UE transmitting a PSCCH/PSSCH and/or a PSFCH may transmit the PSCCH/PSSCH and/or the PSFCH in consideration of a limited TX carrier capability among a plurality of carriers (e.g., transmission of the PSCCH/PSSCH and/or the PSFCH may be allowed only through a limited number of carriers among a plurality of sidelink carriers). Additionally, for example, a UE receiving a PSCCH/PSSCH and/or a PSFCH may receive the PSCCH/PSSCH and/or the PSFCH in consideration of a limited RX carrier capability among a plurality of carriers (e.g., reception of the PSCCH/PSSCH and/or the PSFCH may be allowed only through a limited number of carriers among a plurality of sidelink carriers). For example, when a limited TX carrier capability and/or a limited RX carrier capability of the UE is considered, a UE transmitting a PDCP duplicated sidelink packet may transmit a PSCCH/PSSCH on a plurality of sidelink carriers but may receive a PSFCH only through a single sidelink carrier. For example, a sidelink carrier for PSFCH transmission and/or reception of the UE may be pre-configured through negotiation between UEs (e.g., through SCI, or through MAC CE, or through a PC5 RRC message, or pre-configured by a base station).

For example, when a UE that transmitted a PDCP duplicated sidelink packet through a plurality of carriers does not receive a PSFCH on a single sidelink receiving carrier, the transmission UE may increase a DTX count by 1 for each of a plurality of sidelink transmission carriers (TX sidelink carriers) on which the PDCP duplicated sidelink packet was transmitted. Alternatively, for example, when a UE that transmitted a PDCP duplicated sidelink packet through a plurality of carriers does not receive a PSFCH on a single sidelink receiving carrier, the transmission UE may increase a DTX count by 1 only for the same transmission sidelink carrier (TX sidelink carrier) mapped to the receiving sidelink carrier related to the PSFCH (e.g., the UE may increase the DTX count by 1 for only one sidelink carrier).

For example, when the following condition is satisfied for sidelink reliability (e.g., a metric used to determine whether packet duplication of a sidelink packet in multi-carrier is to be performed), the sidelink data or sidelink service requiring higher reliability may be regarded as such.
- (Condition) For example, when the sidelink service has the same packet error rate (PER), a shorter (remaining) packet delay budget (PDB) and/or a higher SL priority (and/or a message related to an emergency service) may be regarded as having a relatively higher reliability level.

A channel busy ratio (CBR) threshold related to a sidelink carrier, an SL BWP, or an SL HARQ entity illustrated in this disclosure may be configured per priority, or per QoS profile (e.g., PDB or reliability), or per SL radio bearer, or per logical channel.

A wording of the sidelink carrier illustrated in this disclosure may be interpretively extended to an SL BWP or an SL HARQ entity.

An SL resource pool or an SL HARQ entity illustrated in this disclosure may be interpreted as being replaced with an SL resource pool related to a specific sidelink carrier and/or an SL HARQ entity related to a specific sidelink carrier.

Meanwhile, in this disclosure, a logical channel prioritization (LCP) operation of a UE performing a type 2 based LBT in a shared COT duration after receiving the shared COT is proposed as follows.

For example, a UE may receive a plurality of COTs from a counterpart UE (or a base station). For example, when a transmission resource of the UE is included in a plurality of COT durations, when selecting destination data (or a destination, or a destination layer-2 ID) during a MAC PDU generation procedure (e.g., logical channel prioritization (LCP)), the UE may select the destination data (or a destination, or a destination layer-2 ID) based on a highest priority among logical channel data and/or MAC CE that satisfy a CAPC relationship related to each COT of the plurality of shared COTs (for example, a UE that received a shared COT may use the shared COT only when a destination of its logical channel data and/or MAC CE or a destination layer-1 ID or a destination layer-2 ID matches a source address or a source layer-1 ID or a source layer-2 ID of the UE that transferred the shared COT, and/or a source layer-1 ID or a source layer-2 ID of the UE that received the shared COT matches a destination address or a destination layer-1 ID or a destination layer-2 ID of the UE that transferred the shared COT; or, for example, the UE that received the shared COT may perform a type 2 LBT using the shared COT only when a CAPC value of its logical channel data is less than or equal to a CAPC value included in shared COT information; for example, when a CAPC value of the logical channel data of the UE that received the shared COT is greater than the CAPC value included in the shared COT information, the UE may perform a type 1 LBT based channel access procedure to perform transmission of the logical channel data). Additionally, for example, after completion of selection of a destination (or a destination, or a destination layer-2 ID), among the related logical channel data and/or MAC CE, the UE may perform MAC PDU generation that filters logical channel data and/or MAC CE that satisfy a CAPC relationship related to each COT of the plurality of shared COTs (for example, a UE that received a shared COT may use the shared COT only when a destination of its logical channel data and/or MAC CE or a destination layer-1 ID or a destination layer-2 ID matches a source address or a source layer-1 ID or a source layer-2 ID of the UE that transferred the shared COT, and/or a source layer-1 ID or a source layer-2 ID of the UE that received the shared COT matches a destination address or a destination layer-1 ID or a destination layer-2 ID of the UE that transferred the shared COT; or, for example, the UE that received the shared COT may perform a type 2 LBT using the shared COT only when a CAPC value of its logical channel data is less than or equal to a CAPC value included in shared COT information; for example, when a CAPC value of the logical channel data of the UE that received the shared COT is greater than the CAPC value included in the shared COT information, the UE may perform a type 1 LBT based channel access procedure to perform transmission of the logical channel data). Additionally, for example, a UE that received a shared COT may select, as a shared COT to be used, a COT duration in which a plurality of COT durations overlap, and may perform type 2 LBT based data transmission in the overlapping COT duration. Additionally, for example, when selecting a shared COT to be used, the UE that received the shared COT may select a shared COT that is shared by a UE having a destination or a destination layer-1 ID or a destination layer-2 ID selected as a source address or a source layer-1 ID or a source layer-2 ID, and may perform type 2 LBT based data transmission in the corresponding shared COT duration.

Meanwhile, in the present disclosure, a COT based resource selection operation method and a logical channel prioritization (LCP) operation of a UE that received a shared COT or a UE that directly generated a COT or a UE that received a COT from a base station are proposed as follows.

For example, a UE that received a COT from a counterpart UE (or a base station) may perform the following procedure depending on whether its directly generated initial transmission resource and retransmission resource (or an initial transmission resource and a retransmission resource allocated from the base station) are included in a COT duration of the shared COT. For example, when only a retransmission resource is a transmission resource belonging to the COT duration among an initial transmission resource (or a resource used for initial transmission) and a retransmission resource (or a resource used for retransmission), the UE may use the retransmission (or the resource used for retransmission) as an initial transmission (or a resource used for initial transmission) for logical channel data to be transmitted to the UE (or the base station) that shared the COT, when the logical channel data exists in a buffer of the UE. For example, when an initial transmission resource (or a resource used for initial transmission) is a resource not belonging to the COT duration of the shared COT, even when logical channel data to be transmitted to the UE (or the base station) that transferred the shared COT exists in a buffer of the UE, the UE may not apply the enhanced LCP operation below (e.g., when an initial transmission resource is not included in the shared COT, it may be interpreted that the enhanced LCP is not applied).

Meanwhile, an enhanced LCP procedure of the UE may be as follows.

For example, a UE that received a shared COT from a counterpart UE (or a base station) may filter only logical channel data whose destination layer-2 ID (or destination layer-1 ID) is the same as a source layer-2 ID (or a source layer-1 ID) of the UE that shared the COT, and may generate a MAC PDU. Alternatively, for example, when a UE that received a shared COT from a counterpart UE (or a base station) receives shared COT information from the counterpart UE (or the base station), the UE may filter only logical channel data whose representative CAPC value is less than or equal to a CAPC value indicated in the shared COT (and/or in the withdrawn COT), and may generate a MAC PDU. Alternatively, for example, when a UE that received a shared COT from a counterpart UE (or a base station) has a transmission resource directly generated by the UE (or a transmission resource allocated from the base station), the UE may perform a type 2 LBT using the shared COT (and/or the withdrawn COT) only when the transmission resource exists within a COT duration of the shared COT (and/or the withdrawn COT).

Although the operations specified in the present disclosure are described from the perspective of unlicensed band operation between UEs, the proposal(s) may be equally applied to unlicensed band operation between terminals and base stations.

The "channel" specified in the present disclosure may be applied as being replaced with "carrier", a "resource block (RB) set of a specific carrier", or a "band".

For example, whether or not the (some) proposed method/rule of the present disclosure is applied and/or related parameter(s) (e.g., threshold value(s)) may be configured (differently or independently) for each SL-Channel Access Priority Class (CAPC). For example, whether or not the (some) proposed method/rule of the present disclosure is applied and/or related parameter(s) (e.g., threshold value(s)) may be configured (differently or independently) for each SL-LBT type (e.g., Type 1 LBT, Type 2A LBT, Type 2B LBT, Type 2C LBT). For example, whether or not the (some) proposed method/rule of the present disclosure is applied and/or related parameter(s) (e.g., threshold value(s)) may be configured specifically (or differently or independently) depending on whether or not Frame Based LBT is applied. For example, whether or not the (some) proposed method/rule of the present disclosure is applied and/or related parameter(s) (e.g., threshold value(s)) may be configured specifically (or differently or independently) depending on whether or not Load Based LBT is applied.

For example, whether or not the (some) proposed method/rule of the present disclosure is applied and/or related parameter(s) (e.g., threshold value(s)) may be configured (differently or independently) for each resource pool. For example, whether or not the (some) proposed method/rule of the present disclosure is applied and/or related parameter(s) (e.g., threshold value(s)) may be configured (differently or independently) for each congestion level. For example, whether or not the (some) proposed method/rule of the present disclosure is applied and/or related parameter(s) (e.g., threshold value(s)) may be configured (differently or independently) for each service priority. For example, whether or not the (some) proposed method/rule of the present disclosure is applied and/or related parameter(s) (e.g., threshold value(s)) may be configured (differently or independently) for each service type. For example, whether or not the (some) proposed method/rule of the present disclosure is applied and/or related parameter(s) (e.g., threshold value(s)) may be configured (differently or independently) for each QoS requirement (e.g., latency, reliability). For example, whether or not the (some) proposed method/rule of the present disclosure is applied and/or related parameter(s) (e.g., threshold value(s)) may be configured (differently or independently) for each PQI (5G QoS identifier (5QI) for PC5). For example, whether or not the (some) proposed method/rule of the present disclosure is applied and/or related parameter(s) (e.g., threshold value(s)) may be configured (differently or independently) for each traffic type (e.g., periodic generation or aperiodic generation). For example, whether or not the (some) proposed method/rule of the present disclosure is applied and/or related parameter(s) (e.g., threshold value(s)) may be configured (differently or independently) for each SL transmission resource allocation mode (e.g., mode 1 or mode 2). For example, whether or not the (some) proposed method/rule of the present disclosure is applied and/or related parameter(s) (e.g., threshold value(s)) may be configured (differently or independently) for each Tx profile (e.g., a Tx profile indicating that a service supports sidelink DRX operation or a Tx profile indicating that a service does not need to support sidelink DRX operation).

For example, whether or not the proposed rule of the present disclosure is applied and/or related parameter configuration value(s) may be configured (differently or independently) depending on the activation/deactivation of the Uu Bandwidth part. For example, whether or not the proposed rule of the present disclosure is applied and/or related parameter configuration value(s) may be configured (differently or independently) depending on whether the Sidelink Bandwidth part is activated or deactivated. For example, whether or not the proposed rule of the present disclosure is applied and/or related parameter configuration value(s) may be configured (differently or independently) for a sidelink logical channel/logical channel group (or Uu logical channel or Uu logical channel group). For example, whether or not the proposed rule of the present disclosure is applied and/or related parameter configuration value(s) may be configured (differently or independently) of the initial transmission resource selection. For example, whether or not the proposed rule of the present disclosure is applied and/or related parameter configuration value(s) may be configured (differently or independently) of the retransmission resource selection. For example, whether or not the proposed rule of the present disclosure is applied and/or related parameter configuration value(s) may be configured (differently or independently) depending on whether the PUCCH configuration is supported (e.g., in case that a PUCCH resource is configured or in case that a PUCCH resource is not configured). For example, whether or not the proposed rule of the present disclosure is applied and/or related parameter configuration value(s) may be configured (differently or independently) for each resource pool (e.g., a resource pool with a PSFCH or a resource pool without a PSFCH). For example, whether or not the proposed rule of the present disclosure is applied and/or related parameter configuration value(s) may be configured (differently or independently) for each service/packet type. For example, whether or not the proposed rule of the present disclosure is applied and/or related parameter configuration value(s) may be configured (differently or independently) for each service/packet priority. For example, whether or not the proposed rule of the present disclosure is applied and/or related parameter configuration value(s) may be configured (differently or independently) for each QoS requirement (e.g., URLLC/EMBB traffic, reliability, latency). For example, whether or not the proposed rule of the present disclosure is applied and/or related parameter configuration value(s) may be configured (differently or independently) for each PQI. For example, whether or not the proposed rule of the present disclosure is applied and/or related parameter configuration value(s) may be configured (differently or independently) for each PFI. For example, whether or not the proposed rule of the present disclosure is applied and/or related parameter configuration value(s) may be configured (differently or independently) for each cast type (e.g., unicast, groupcast, broadcast). For example, whether or not the proposed rule of the present disclosure is applied and/or related parameter configuration value(s) may be configured (differently or independently) for each (resource pool) congestion level (e.g., CBR). For example, whether or not the proposed rule of the present disclosure is applied and/or related parameter configuration value(s) may be configured (differently or independently) for each SL HARQ feedback option (e.g., NACK-only feedback, ACK/NACK feedback). For example, whether or not the proposed rule of the present disclosure is applied and/or related parameter configuration value(s) may be configured specifically (or differently or independently) for HARQ Feedback Enabled MAC PDU transmission. For example, whether or not the proposed rule of the present disclosure is applied and/or related parameter configuration value(s) may be configured specifically (or differently or independently) for HARQ Feedback Disabled MAC PDU transmission. For example, whether or not the proposed rule of the present disclosure is applied and/or related parameter configuration value(s) may be configured specifically (or differently or independently) according to whether a PUCCH-based SL HARQ feedback reporting operation is configured or not. For example, whether or not the proposed rule of the present disclosure is applied and/or related parameter configuration value(s) may be configured specifically (or differently or independently) for pre-emption or depending on whether or not pre-emption-based resource reselection is performed. For example, whether or not the proposed rule of the present disclosure is applied and/or related parameter configuration value(s) may be configured specifically (or differently or independently) for re-evaluation or depending on whether or not re-evaluation-based resource reselection is performed. For example, whether or not the proposed rule of the present disclosure is applied and/or related parameter configuration value(s) may be configured (differently or independently) for each (L2 or L1) (source and/or destination) identifier. For example, whether or not the proposed rule of the present disclosure is applied and/or related parameter configuration value(s) may be configured (differently or independently) for each (L2 or L1) (a combination of source ID and destination ID) identifier. For example, whether or not the proposed rule of the present disclosure is applied and/or related parameter configuration value(s) may be configured (differently or independently) for each (L2 or L1) (a combination of a pair of source ID and destination ID and a cast type) identifier. For example, whether or not the proposed rule of the present disclosure is applied and/or related parameter configuration value(s) may be configured (differently or independently) for each direction of a pair of source layer ID and destination layer ID. For example, whether or not the proposed rule of the present disclosure is applied and/or related parameter configuration value(s) may be configured (differently or independently) for each PC5 RRC connection/link. For example, whether or not the proposed rule of the present disclosure is applied and/or related parameter configuration value(s) may be configured specifically (or differently or independently) depending on whether or not SL DRX is performed. For example, whether or not the proposed rule of the present disclosure is applied and/or related parameter configuration value(s) may be configured specifically (or differently or independently) depending on whether or not SL DRX is supported. For example, whether or not the proposed rule of the present disclosure is applied and/or related parameter configuration value(s) may be configured (differently or independently) for each SL mode type (e.g., resource allocation mode 1 or resource allocation mode 2). For example, whether or not the proposed rule of the present disclosure is applied and/or related parameter configuration value(s) may be configured specifically (or differently or independently) for the case of performing (a)periodic resource reservation. For example, whether or not the proposed rule of the present disclosure is applied and/or related parameter configuration value(s) may be configured specifically (or differently or independently) for each Tx profile (e.g., a Tx profile indicating that a service supports sidelink DRX operation or a Tx profile indicating that a service does not need to support sidelink DRX operation).

The proposal and whether or not the proposal rule of the present disclosure is applied (and/or related parameter configuration value(s)) may also be applied to a mmWave SL operation.

According to various embodiments of the present disclosure, a PSFCH occasion for a PSSCH may be determined based on a channel access time for a PSSCH resource. Specifically, when a plurality of PSSCH resources different from each other in a time domain are generated and when a plurality of PSFCH occasions related to each PSSCH exist, among the plurality of PSFCH occasions for a PSSCH resource generated earlier in the time domain, the PSFCH occasion for the PSSCH resource generated earlier may be determined by excluding PSFCH occasions included in slots overlapping with the channel access time for a PSSCH resource generated later in the time domain. In this case, for example, the success probability of LBT for the PSSCH resource generated later in the time domain may increase. Alternatively, for example, even when a transmission priority of data mapped to the PSSCH resource generated later in the time domain is higher than a transmission priority of data mapped to the PSSCH resource generated earlier in the time domain, since an LBT for the PSSCH resource generated later in the time domain has a reduced probability of being interfered with by the PSFCH occasion for the PSSCH resource generated earlier in the time domain, a quality of a service based on the transmission of high priority data may be ensured. Alternatively, for example, LBT failure caused by feedback resources may be prevented, thereby preventing unnecessary resource reselection from being performed. Alternatively, for example, power consumption caused by performing an unnecessary resource reselection procedure may be prevented.

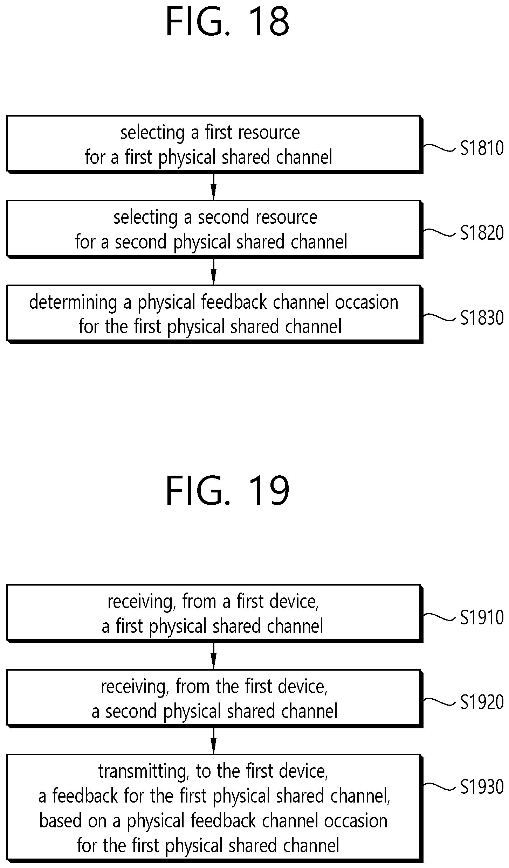

FIG. 18 shows a method for performing wireless communication by a first device, based on an embodiment of the present disclosure. The embodiment of FIG. 18 may be combined with various embodiments of the present disclosure.

Referring to FIG. 18, in step S1810, a first device may select a first resource for a first physical shared channel. In step S1820, the first device may select a second resource for a second physical shared channel. In step S1830, the first device may determine a physical feedback channel occasion for the first physical shared channel. For example, the physical feedback channel occasion may be determined based on a channel access time for accessing the second resource after the first resource.

For example, the physical feedback channel occasion may be determined in a time domain before the channel access time for accessing the second resource.

For example, the physical feedback channel occasion may be determined in a time duration excluding a time duration related to N consecutive resources before the second resource. For example, a value of the N may be determined such that the time duration related to the N consecutive resources before the second resource includes the channel access time for accessing the second resource. For example, a listen before talk (LBT) for accessing the second resource may be performed in the time duration related to the N consecutive resources before the second resource.

For example, based on each of a plurality of slots including a physical feedback channel related to the first physical shared channel, the physical feedback channel occasion is determined by excluding a slot that overlaps with the channel access time for accessing the second resource among the plurality of slots. For example, based on a first slot including a first physical feedback channel related to the first physical shared channel being overlapped with the channel access time for accessing the second resource among the plurality of slots, a slot other than the first slot including a physical feedback channel other than the first physical feedback channel among the plurality of slots may be determined as a slot for the physical feedback channel occasion.

For example, a channel access priority class (CAPC) value related to data transmitted through the second physical shared channel may be less than a CAPC value related to data transmitted through the first physical shared channel.

For example, a priority of a transmission related to the second physical shared channel may be higher than a priority of a transmission related to the first physical shared channel. For example, the priority of the transmission related to the second physical shared channel may be determined based on a CAPC value related to data transmitted through the second physical shared channel. And, for example, the priority of the transmission related to the first physical shared channel may be determined based on a CAPC value related to data transmitted through the first physical shared channel.

For example, data transmitted through the first physical shared channel may be data with hybrid automatic repeat request (HARQ) feedback enabled.

For example, the second resource for the second physical shared channel may be selected, based on a channel being idle during the channel access time.

For example, the channel access time for accessing the second resource may be random.

The proposed method may be applied to devices according to various embodiments of the present disclosure. First, a processor 102 of a first device 100 may select a first resource for a first physical shared channel. And, the processor 102 of the first device 100 may select a second resource for a second physical shared channel. And, the processor 102 of the first device 100 may determine a physical feedback channel occasion for the first physical shared channel. For example, he physical feedback channel occasion may be determined based on a channel access time for accessing the second resource after the first resource.

According to one embodiment of the present disclosure, provided is a first device configured to perform wireless communication. The first device may comprise: at least one transceiver; at least one processor; and at least one memory connected to the at least one processor and storing instructions. For example, the instructions, based on being executed by the at least one processor, cause the first device to perform operations comprising: selecting a first resource for a first physical shared channel; selecting a second resource for a second physical shared channel; and determining a physical feedback channel occasion for the first physical shared channel. For example, the physical feedback channel occasion may be determined based on a channel access time for accessing the second resource after the first resource.

According to one embodiment of the present disclosure, provided is a processing device configured to control a first device. The processing device may comprise: at least one processor; and at least one memory connected to the at least one processor and storing instructions. For example, the instructions, based on being executed by the at least one processor, cause the first device to perform operations comprising: selecting a first resource for a first physical shared channel; selecting a second resource for a second physical shared channel; and determining a physical feedback channel occasion for the first physical shared channel. For example, the physical feedback channel occasion may be determined based on a channel access time for accessing the second resource after the first resource.

According to one embodiment of the present disclosure, provided is a non-transitory computer-readable storage medium recording instructions. For example, the instructions, based on being executed, cause a first device to perform operations comprising: selecting a first resource for a first physical shared channel; selecting a second resource for a second physical shared channel; and determining a physical feedback channel occasion for the first physical shared channel. For example, the physical feedback channel occasion may be determined based on a channel access time for accessing the second resource after the first resource.

FIG. 19 shows a method for performing wireless communication by a second device, based on an embodiment of the present disclosure. The embodiment of FIG. 19 may be combined with various embodiments of the present disclosure.

Referring to FIG. 19, in step S1910, a second device may receive, from a first device, a first physical shared channel. In step S1920, the second device may receive, from the first device, a second physical shared channel. In step S1930, the second device may transmit, to the first device, a feedback for the first physical shared channel, based on a physical feedback channel occasion for the first physical shared channel. For example, the physical feedback channel occasion may be determined based on a channel access time for the first device to access a second resource related to the second physical shared channel after a first resource related to the first physical shared channel.

The proposed method may be applied to devices according to various embodiments of the present disclosure. First, a processor 202 of a second device 200 may control a transceiver 206 to receive, from a first device, a first physical shared channel. And, the processor 202 of the second device 200 may control the transceiver 206 to receive, from the first device, a second physical shared channel. And, the processor 202 of the second device 200 may control the transceiver 206 to transmit, to the first device, a feedback for the first physical shared channel, based on a physical feedback channel occasion for the first physical shared channel. For example, the physical feedback channel occasion may be determined based on a channel access time for the first device to access a second resource related to the second physical shared channel after a first resource related to the first physical shared channel.

According to one embodiment of the present disclosure, provided is a second device configured to perform wireless communication. The second device may comprise: at least one transceiver; at least one processor; and at least one memory connected to the at least one processor and storing instructions. For example, the instructions, based on being executed by the at least one processor, cause the second device to perform operations comprising: receiving, from a first device, a first physical shared channel; receiving, from the first device, a second physical shared channel; and transmitting, to the first device, a feedback for the first physical shared channel, based on a physical feedback channel occasion for the first physical shared channel. For example, the physical feedback channel occasion may be determined based on a channel access time for the first device to access a second resource related to the second physical shared channel after a first resource related to the first physical shared channel.

According to one embodiment of the present disclosure, provided is a processing device configured to control a second device. The processing device may comprise: at least one processor; and at least one memory connected to the at least one processor and storing instructions. For example, the instructions, based on being executed by the at least one processor, cause the second device to perform operations comprising: receiving, from a first device, a first physical shared channel; receiving, from the first device, a second physical shared channel; and transmitting, to the first device, a feedback for the first physical shared channel, based on a physical feedback channel occasion for the first physical shared channel. For example, the physical feedback channel occasion may be determined based on a channel access time for the first device to access a second resource related to the second physical shared channel after a first resource related to the first physical shared channel.

According to one embodiment of the present disclosure, provided is a non-transitory computer-readable storage medium recording instructions. For example, the instructions, based on being executed, cause a second device to perform operations comprising: receiving, from a first device, a first physical shared channel; receiving, from the first device, a second physical shared channel; and transmitting, to the first device, a feedback for the first physical shared channel, based on a physical feedback channel occasion for the first physical shared channel. For example, the physical feedback channel occasion may be determined based on a channel access time for the first device to access a second resource related to the second physical shared channel after a first resource related to the first physical shared channel.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

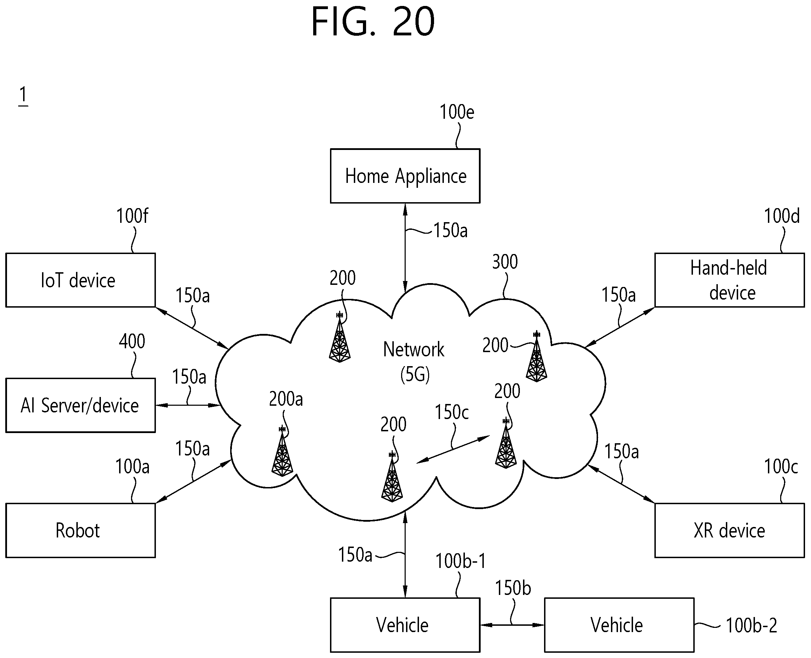

FIG. 20 shows a communication system 1, based on an embodiment of the present disclosure. The embodiment of FIG. 20 may be combined with various embodiments of the present disclosure.

Referring to FIG. 20, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

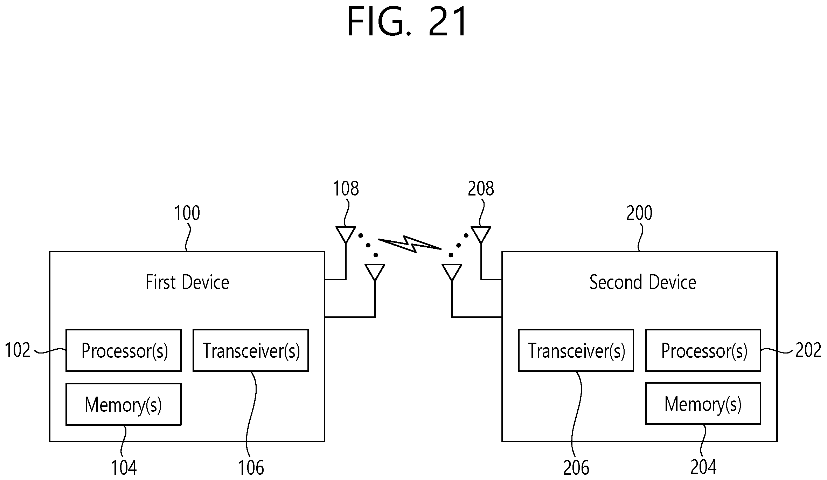

FIG. 21 shows wireless devices, based on an embodiment of the present disclosure. The embodiment of FIG. 21 may be combined with various embodiments of the present disclosure.

Referring to FIG. 21, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 20.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

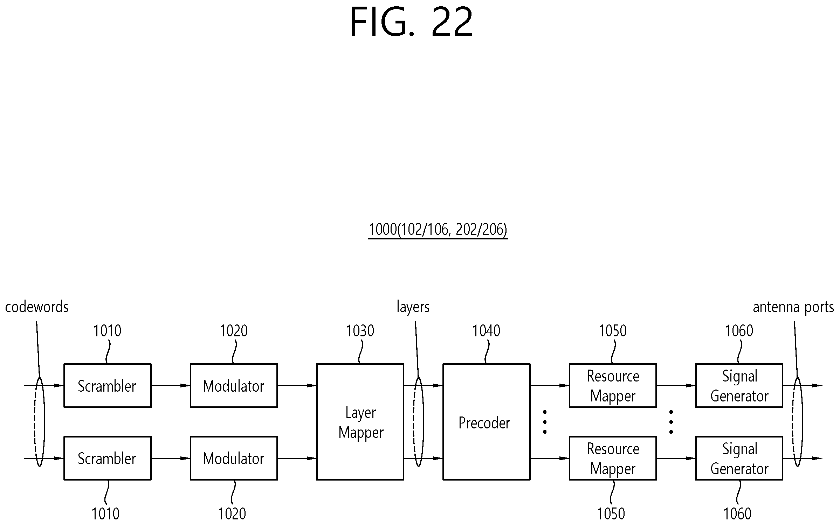

FIG. 22 shows a signal process circuit for a transmission signal, based on an embodiment of the present disclosure. The embodiment of FIG. 22 may be combined with various embodiments of the present disclosure.

Referring to FIG. 22, a signal processing circuit 1000 may include scramblers 1010, modulators 1020, a layer mapper 1030, a precoder 1040, resource mappers 1050, and signal generators 1060. An operation/function of FIG. 22 may be performed, without being limited to, the processors 102 and 202 and/or the transceivers 106 and 206 of FIG. 21. Hardware elements of FIG. 22 may be implemented by the processors 102 and 202 and/or the transceivers 106 and 206 of FIG. 21. For example, blocks 1010 to 1060 may be implemented by the processors 102 and 202 of FIG. 21. Alternatively, the blocks 1010 to 1050 may be implemented by the processors 102 and 202 of FIG. 21 and the block 1060 may be implemented by the transceivers 106 and 206 of FIG. 21.

Codewords may be converted into radio signals via the signal processing circuit 1000 of FIG. 22. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 22. For example, the wireless devices (e.g., 100 and 200 of FIG. 21) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

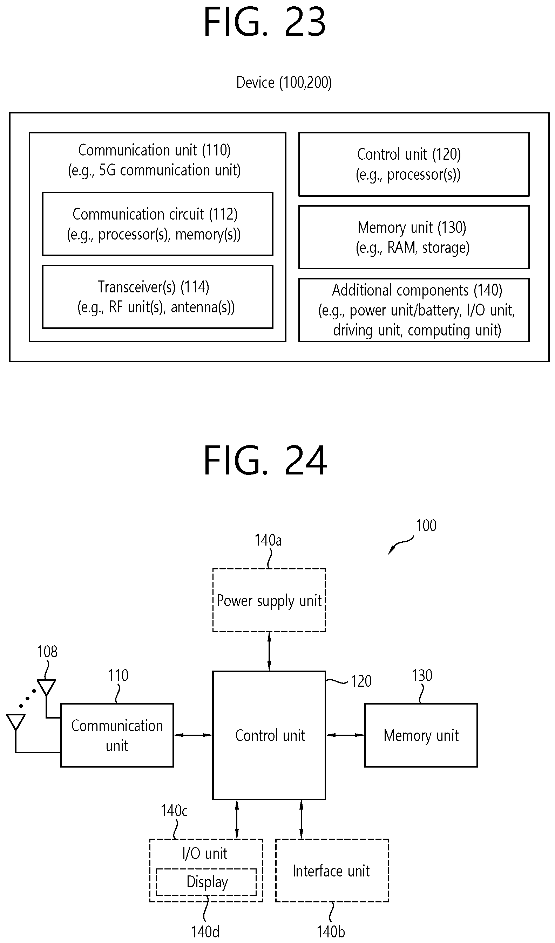

FIG. 23 shows another example of a wireless device, based on an embodiment of the present disclosure. The wireless device may be implemented in various forms according to a use-case/service (refer to FIG. 20). The embodiment of FIG. 23 may be combined with various embodiments of the present disclosure.

Referring to FIG. 23, wireless devices 100 and 200 may correspond to the wireless devices 100 and 200 of FIG. 21 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 21. For example, the transceiver(s) 114 may include the one or more transceivers 106 and 206 and/or the one or more antennas 108 and 208 of FIG. 21. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 20), the vehicles (100b-1 and 100b-2 of FIG. 20), the XR device (100c of FIG. 20), the hand-held device (100d of FIG. 20), the home appliance (100e of FIG. 20), the IoT device (100f of FIG. 20), a digital broadcast terminal, a hologram device, a public safety device, an MTC device, a medicine device, a fintech device (or a finance device), a security device, a climate/environment device, the AI server/device (400 of FIG. 20), the BSs (200 of FIG. 20), a network node, etc. The wireless device may be used in a mobile or fixed place according to a use-example/service.

In FIG. 23, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 23 will be described in detail with reference to the drawings.

FIG. 24 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 24 may be combined with various embodiments of the present disclosure.

Referring to FIG. 24, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 23, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

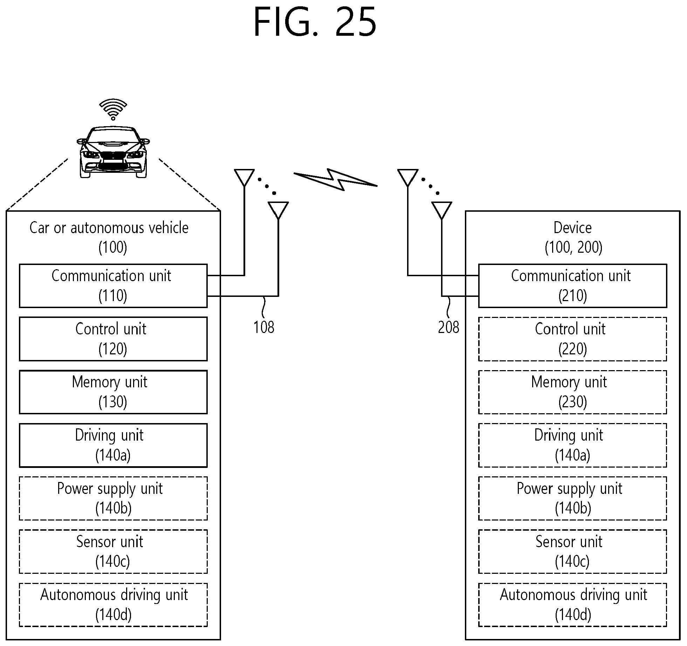

FIG. 25 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 25 may be combined with various embodiments of the present disclosure.

Referring to FIG. 25, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 23, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:
selecting a first resource for a first physical shared channel;
selecting a second resource for a second physical shared channel; and
determining a physical feedback channel occasion for the first physical shared channel,
wherein the physical feedback channel occasion is determined based on a channel access time for accessing the second resource after the first resource.

2. The method of claim 1, wherein the physical feedback channel occasion is determined in a time domain before the channel access time for accessing the second resource.

3. The method of claim 1, wherein the physical feedback channel occasion is determined in a time duration excluding a time duration related to N consecutive resources before the second resource.

4. The method of claim 3, wherein a value of the N is determined such that the time duration related to the N consecutive resources before the second resource includes the channel access time for accessing the second resource.

5. The method of claim 3, wherein a listen before talk (LBT) for accessing the second resource is performed in the time duration related to the N consecutive resources before the second resource.

6. The method of claim 1, wherein, based on each of a plurality of slots including a physical feedback channel related to the first physical shared channel, the physical feedback channel occasion is determined by excluding a slot that overlaps with the channel access time for accessing the second resource among the plurality of slots.

7. The method of claim 6, wherein, based on a first slot including a first physical feedback channel related to the first physical shared channel being overlapped with the channel access time for accessing the second resource among the plurality of slots, a slot other than the first slot including a physical feedback channel other than the first physical feedback channel among the plurality of slots is determined as a slot for the physical feedback channel occasion.

8. The method of claim 1, wherein a channel access priority class (CAPC) value related to data transmitted through the second physical shared channel is less than a CAPC value related to data transmitted through the first physical shared channel.

9. The method of claim 1, wherein a priority of a transmission related to the second physical shared channel is higher than a priority of a transmission related to the first physical shared channel.

10. The method of claim 9, wherein the priority of the transmission related to the second physical shared channel is determined based on a CAPC value related to data transmitted through the second physical shared channel, and
wherein the priority of the transmission related to the first physical shared channel is determined based on a CAPC value related to data transmitted through the first physical shared channel.

11. The method of claim 1, wherein data transmitted through the first physical shared channel is data with hybrid automatic repeat request (HARQ) feedback enabled.

12. The method of claim 1, wherein the second resource for the second physical shared channel is selected, based on a channel being idle during the channel access time.

13. The method of claim 1, wherein the channel access time for accessing the second resource is random.

14. A first device adapted to perform wireless communication, the first device comprising:
at least one transceiver;
at least one processor; and
at least one memory connected to the at least one processor and storing instructions that, based on being executed, cause the first device to perform operations comprising:
selecting a first resource for a first physical shared channel;
selecting a second resource for a second physical shared channel; and
determining a physical feedback channel occasion for the first physical shared channel,
wherein the physical feedback channel occasion is determined based on a channel access time for accessing the second resource after the first resource.

15. A processing device adapted to control a first device to perform wireless communication, the processing device comprising:
at least one processor; and
at least one memory connected to the at least one processor and storing instructions that, based on being executed, cause the at least one processor to perform operations comprising:
selecting a first resource for a first physical shared channel;
selecting a second resource for a second physical shared channel; and
determining a physical feedback channel occasion for the first physical shared channel,
wherein the physical feedback channel occasion is determined based on a channel access time for accessing the second resource after the first resource.

16. A non-transitory computer-readable storage medium recording instructions, the instruction, when executed, cause a first device to perform operations comprising:
selecting a first resource for a first physical shared channel;
selecting a second resource for a second physical shared channel; and
determining a physical feedback channel occasion for the first physical shared channel,
wherein the physical feedback channel occasion is determined based on a channel access time for accessing the second resource after the first resource.

17. A method for performing wireless communication by a second device, the method comprising:
receiving, from a first device, a first physical shared channel;
receiving, from the first device, a second physical shared channel; and
transmitting, to the first device, a feedback for the first physical shared channel, based on a physical feedback channel occasion for the first physical shared channel,
wherein the physical feedback channel occasion is determined based on a channel access time for the first device to access a second resource related to the second physical shared channel after a first resource related to the first physical shared channel.

18. A second device adapted to perform wireless communication, the second device comprising:
at least one transceiver;
at least one processor; and
at least one memory connected to the at least one processor and storing instructions that, based on being executed, cause the second device to perform operations comprising:
receiving, from a first device, a first physical shared channel;
receiving, from the first device, a second physical shared channel; and
transmitting, to the first device, a feedback for the first physical shared channel, based on a physical feedback channel occasion for the first physical shared channel,
wherein the physical feedback channel occasion is determined based on a channel access time for the first device to access a second resource related to the second physical shared channel after a first resource related to the first physical shared channel.

19. A processing device adapted to control a second device to perform wireless communication, the processing device comprising:
at least one processor; and
at least one memory connected to the at least one processor and storing instructions that, based on being executed, cause the at least one processor to perform operations comprising:
receiving, from a first device, a first physical shared channel;
receiving, from the first device, a second physical shared channel; and
transmitting, to the first device, a feedback for the first physical shared channel, based on a physical feedback channel occasion for the first physical shared channel,
wherein the physical feedback channel occasion is determined based on a channel access time for the first device to access a second resource related to the second physical shared channel after a first resource related to the first physical shared channel.

20. A non-transitory computer-readable storage medium recording instructions, the instruction, when executed, cause a second device to perform operations comprising:
receiving, from a first device, a first physical shared channel;
receiving, from the first device, a second physical shared channel; and
transmitting, to the first device, a feedback for the first physical shared channel, based on a physical feedback channel occasion for the first physical shared channel,
wherein the physical feedback channel occasion is determined based on a channel access time for the first device to access a second resource related to the second physical shared channel after a first resource related to the first physical shared channel.
